# FASCICULE DE BREVET EUROPEEN

(11) **EP 2 689 552 B1**
(45) Date de publication et mention de la délivrance du brevet: **17.08.2016**
(21) Numéro de dépôt: 11773482.2
(22) Date de dépôt: 29.09.2011
(51) Int. Cl.: H04L 9/08, H04L 9/32

(54) **INFRASTRUCTURE NON HIÉRARCHIQUE DE GESTION DE BI-CLÉS DE SÉCURITÉ DE PERSONNES PHYSIQUES OU D'ÉLÉMENTS (IGCP/PKI).**
NICHT-HIERARCHISCHE INFRASTRUKTUR ZUR VERWALTUNG VON TWIN-SICHERHEITSSCHLÜSSELN VON PHYSISCHEN PERSONEN ODER VON ELEMENTEN (/IGCP PKI).
NON-HIERARCHICAL INFRASTRUCTURE FOR MANAGING TWIN-SECURITY KEYS OF PHYSICAL PERSONS OR OF ELEMENTS (IGCP/PKI).

(30) Priorité: 25.03.2011 WO PCT/FR2011/000178
(43) Date de publication de la demande: 29.01.2014
(73) Titulaire: NTX Research SA, 75116 Paris (FR)
(72) Inventeur: THONIEL, Pascal, F-50400 Granville (FR); MELEMEDJIAN, Francis, F-92130 Issy-les-Moulineaux (FR)
(74) Mandataire: Audic, Hervé
(86) Numéro de dépôt international: PCT/FR2011/000532
(87) Numéro de publication internationale: WO 2012/131175

(56) Documents cités:
- EP-A2- 1 162 781
- WO-A1-03/046748
- WO-A1-2011/117486
- WO-A2-2007/006008
- US-A1- 2001 032 314
- US-A1- 2002 150 241
- US-A1- 2007 217 344
- RSA Laboratories: "PKCS #1 v2.1: RSA Cryptography Standard", , 14 juin 2002 (2002-06-14), XP055001114, ftp://ftp.rsasecurity.com/pub/pkcs/pkcs-1/ pkcs-1v2-1.pdf Extrait de l'Internet: URL:ftp://ftp.rsasecurity.com/pub/pkcs/pkc s-1/pkcs-1v2-1.pdf
- TONG ZHOU ET AL: "Risk management of digital certificates in ad hoc and P2P networks", ELECTRICAL AND COMPUTER ENGINEERING, 2008. CCECE 2008. CANADIAN CONFERENCE ON, IEEE, PISCATAWAY, NJ, USA, 4 mai 2008 (2008-05-04), pages 325-330, XP031285978, ISBN: 978-1-4244-1642-4

## Description

L'invention concerne une infrastructure de gestion de clés publiques (IGCP) ou en anglais *Public Key Infrastructure* (PKI) - système de cryptographie asymétrique appliquée comportant un couple de clés (bi-clé) à savoir une clé publique et une clé privée - son organisation, ses protocoles cryptographiques, ainsi qu'un dispositif pour la mise en oeuvre du procédé.

L'invention s'applique notamment à la sécurisation des communications sur un réseau distant tel que par exemple le réseau Internet ou de téléphonie, notamment pour la banque en ligne, le paiement en ligne, l'administration en ligne, la santé en ligne ou tout autre type de transaction nécessitant une fiabilité et une sécurité importante comme les accès Intranet et Extranet. Par extension, l'invention s'applique également à l'Internet des objets (*Intemet of Things*), aux communications locales ou distantes entre les équipements (M2M, *Machine to Machine*) ainsi qu'entre les utilisateurs autorisés et ces équipements.

L'invention vise à fournir une infrastructure de sécurité capable d'assurer les fonctions de sécurité d'authentification et de confidentialité ainsi que la technique cryptographique de la signature électronique.

La sécurité d'un système cryptographique utilisant un algorithme asymétrique repose en grande partie sur la gestion des clés publiques.

Dès qu'un système cryptographique possède un grand nombre d'utilisateurs, il faut mettre en oeuvre une infrastructure de gestion de clés. Les IGCP sont créées pour rendre opérationnelle la cryptographie asymétrique (bi-clé) dans le monde réel.

Une IGCP se définit généralement comme un ensemble de technologies, organisations, procédures et pratiques qui supporte l'implémentation et l'exploitation de certificats basés sur la cryptographie à clé publique.

La cryptographie à clé publique est confrontée à un problème extrêmement difficile : comment garantir la validité des clés publiques ? Dès qu'un utilisateur veut chiffrer un message à l'aide d'un algorithme asymétrique ou vérifier une signature, il doit se procurer la clé publique de son interlocuteur (le destinataire du message) ou celle du signataire. Si les clés publiques sont stockées dans des annuaires non sécurisés, elles risquent d'être interceptées et/ou remplacées par d'autres clés. Il est donc possible de fabriquer de fausses signatures simplement en substituant la clé publique d'un utilisateur.

Ce problème crucial pour toute la cryptographie à clé publique peut être résolu en introduisant une tierce partie de confiance, appelée Autorité de Certification (AC), qui valide le lien entre l'identité des utilisateurs et leurs clés publiques. Formellement, un certificat de clé publique est composé d'un texte clair et d'une signature. Le texte clair contient en particulier une clé publique et une chaîne de caractères identifiant le propriétaire de cette clé. La signature correspond à la signature numérique du texte clair précédent par l'AC. Si cette signature est authentique, elle prouve que l'AC valide le lien entre l'identité d'un utilisateur et sa clé publique.

On connaît des IGCP dans lesquelles la pierre angulaire de la sécurité de la clé publique est assurée par une Autorité de Certification (AC). Une AC est une tierce partie de confiance pour la génération, la signature, la publication et la révocation des certificats de clés publiques.

Il existe actuellement deux grands types d'architectures IGCP : les architectures hiérarchiques et les architectures non hiérarchiques. Une architecture hiérarchique repose sur différentes Autorités de Certification (AC) qui sont distinctes des utilisateurs. Une architecture non hiérarchique repose sur la confiance mutuelle entre les utilisateurs, et chaque utilisateur est en quelque sorte sa propre AC. Ces deux types d'architectures IGCP sont notamment cités dans une publication IEEE de 2008 intitulée « Risk management of digital certificates in ad hoc and P2P networks » (Tong Zhou et Lein Harn).

Dans le modèle hiérarchique, on connait la *Public Key Infrastructure X.509* (PKIX), système décrit dans ISO/IEC 9594-8 et dans ITU-T Recommandation X.509, dans lequel la clé publique d'un utilisateur est certifiée par une autorité dont la clé publique est à son tour certifiée par une autorité supérieure.

Dans la pratique, une IGCP hiérarchique « reconnue » ou « internationale » revient à confier à des sociétés tierces spécialisées - les Autorités de Certification (AC) comme « Verisign », « Entrust », « Thawte », « Keynectis », « CertiNomis », ... - le soin de certifier la clé publique d'une entité ou d'un individu. Ces sociétés, parce qu'elles sont des autorités de certification reconnues, garantissent et assurent la validité d'une clé publique et surtout son appartenance à son propriétaire légitime depuis n'importe quel navigateur Internet ou, par exemple, logiciel de messagerie. Ainsi, l'utilisation du certificat de clé publique devient sûre.

Dans la pratique, une IGCP hiérarchique « interne » revient à substituer aux Autorités de Certification (AC) tierces évoquées ci-dessus sa propre organisation. Autrement dit, une entité suffisamment importante peut déployer sa propre architecture interne en devenant de ce fait sa propre Autorité d'Enregistrement (AE) et sa propre AC pour ses membres (certificats « client »). Cette solution est souvent déployée pour une utilisation interne aux grandes entreprises et administrations.

Ce s deux IGCP hiérarchiques « reconnue » et « interne » sont éprouvées sur le plan de la sécurité (cryptographie). Elles sont aussi viables sur les plans technologique, organisationnel et économique. Cependant, chacune est adaptée à un contexte particulier qui ne correspond pas au besoin d'un déploiement à grande échelle au niveau des particuliers, qu'ils soient citoyen, consommateur et/ou professionnel.

Lors du discours d'ouverture du 15 février 2011 de la 20ème édition américaine de la *RSA Conference* à San Francisco, Monsieur Art Coviello, le CEO (*Chief Executive Officer*) de RSA, la division sécurité de EMC, a passé en revue certains des épisodes les moins inspirés du secteur de la sécurité informatique dont celui concernant la PKI. Graphique à l'appui, M. Art Coviello montre combien en l'espace d'une décennie la PKI a intrigué, séduit, excité et enfin déçu les attentes. Il trace ensuite un parallèle entre l'engouement pour les infrastructures à clés publiques en 2000 et celui pour le *Cloud Computing* aujourd'hui. Mais selon lui toute ressemblance s'arrête là : « Le *Cloud* n'est pas une mode comme le fut la PKI. Non : contrairement à cette dernière, qui faisait beaucoup parler d'elle mais était rarement déployée sur le terrain, le *Cloud Computing* transforme les entreprises dès aujourd'hui ».

Les Autorités de Certification sont centralisées. Cela pose des problèmes d'organisation pratique et de sécurité pour l'enregistrement et la délivrance des certificats à de nombreux utilisateurs venant d'horizons divers.

Le point d'achoppement des IGCP hiérarchiques est l'Autorité de Certification dès lors qu'elles adressent un grand nombre d'utilisateurs comme c'est le cas des personnes physiques ou particuliers, qu'ils soient citoyen, consommateur et/ou professionnel.

En effet, les Autorités de Certification des IGCP « internationales » ne disposent pas d'agences d'enregistrement de proximité pour enrôler les utilisateurs de manière satisfaisante (présence physique obligatoire) et imposent une redevance annuelle non négligeable pour chaque particulier. Dans le présent contexte, il y en a des millions voire des milliards.

Par ailleurs, lors de la délivrance d'un certificat à distance (ce qui est souvent le cas) l'Autorité de Certification enrôle les utilisateurs avant de certifier leur clé publique. Il y a donc confusion des rôles puisque l'enrôlement est normalement dévolu à une autorité d'enregistrement.

L'invention propose une IGCP non hiérarchique, c'est-à-dire sans Autorité de Certification distincte des utilisateurs, afin que le système soit centré sur le particulier (citoyen/consommateur/professionnel). L'organisation proposée comprend de nombreuses agences de proximité réparties sur le territoire afin de faciliter l'accès à l'enrôlement et de garantir la sécurité par des procédures en « face à face ».

Dans le modèle non hiérarchique, on connaît des systèmes sans Autorité de Certification externe, comme le système *Pretty Good Privacy* (PGP), dans lesquels la clé publique d'un utilisateur est certifiée par lui-même et aussi par d'autres utilisateurs. Cette architecture repose sur la confiance. On accepte la clé publique d'un utilisateur parce qu'elle est signée par une personne dont la clé est elle-même signée par quelqu'un que l'on connaît et en qui on a confiance.

D'autres systèmes non hiérarchiques existent comme *Simple Public Key Infrastructure* (SPKI) appelé familièrement « Spookey » et *Simple Distributed Security Infrastucture* (SDSI) appelé familièrement « Sudsy » qui ont fusionné en 1996. Ces systèmes restent toutefois limités car ils n'adressent que des groupes restreints d'individus et peuvent difficilement être déployés à très grande échelle.

Comme cela est clairement expliqué dans un article publié sur Wikipedia® à ce sujet, le modèle SPKI/SDSI ne définit pas de rôle pour une Autorité de Certification (AC) commerciale. En fait, une prémisse SPKI est qu'une AC commerciale ne sert à rien. En conséquence de quoi, l'architecture SPKI/SDSI est déployée principalement dans des solutions fermées et dans des projets de démonstration académiques. Un autre effet secondaire de ce modèle est qu'il est difficile de monétiser une infrastructure SPKI/SDSI par elle-même. Elle peut être un composant d'un autre produit, mais il n'y a aucune analyse de rentabilisation pour le développement d'outils et de services SPKI/SDSI, sauf dans le cadre d'un autre produit.

On connait également le brevet suivant, WO 03/046748 A1 (VISIONSHARE INC [US] du 5 juin 2003, dans lequel la structure décrite ne comprend pas d'Autorité de Certification mais des annuaires communs pouvant contenir des certificats de clé publique émanant de plusieurs entités distinctes et dans lequel un certificat de clé publique est établi par une agence locale d'enregistrement. La mise en commun dans le même annuaire d'identités (et de leurs crédentiels associés) de personnes venant d'entités distinctes sur le plan juridique est toutefois susceptible de poser des problèmes.

On connait également les brevets suivants, US 2002/0150241 A1 (SCHEIDT EDWARD [US] ET AL) du 17 octobre 2002, et WO 2007/006008 A2 (MICROSOFT CORP [US]) du 11 janvier 2007, dans lesquels les architectures décrites utilisent un notaire et des certificats auto-signés, mais qui ne permettent pas d'assurer un niveau de sécurité suffisant.

L'invention vise donc à améliorer les architectures, les structures, les méthodes et les procédés précédemment cités pour permettre à de nombreux utilisateurs de s'authentifier, de signer des transactions, de chiffrer des messages facilement et à un coût minime.

L'invention consiste en une nouvelle IGCP dite « 2.0 » ou « PK12.0 » construite sur trois niveaux. Cette nouvelle IGCP a pour but d'apporter à un grand nombre de particuliers citoyens/ consommateurs/professionnels d'horizons divers, les moyens de sécurité cryptographique nécessaires à la confiance dans la vie numérique. L'invention permet à de nombreuses personnes physiques d'horizons divers de s'authentifier, de signer des transactions, de chiffrer des messages facilement et à un coût minime.

Le problème ne se pose pas dans le déploiement, la gestion et l'utilisation des certificats « serveur » qui sont bien gérés par l'IGCP hiérarchique « reconnue » au troisième niveau. Le problème se pose plutôt dans celui des certificats « client », c'est-à-dire ceux destinés aux agents d'enregistrement d'une part (deuxième niveau), et aux particuliers d'autre part (troisième niveau).

L'invention propose donc un deuxième niveau pour gérer les certificats client des agents d'enregistrement par une IGCP « interne » : une par acteur d'un cercle de confiance, comme par exemple une banque ou un opérateur de télécommunication.

L'invention propose aussi un premier niveau pour traiter le cas du particulier citoyen/consommateur/professionnel avec l'innovation de l'IGCP non hiérarchique dite « utilisateur ».

L'infrastructure proposée comprend donc trois niveaux : une IGCP « reconnue » (ou « internationale ») pour délivrer et gérer les certificats serveur des fournisseurs d'identité (IDP), des fournisseurs d'attributs (AP) et des fournisseurs de services (SP) ; une IGCP « interne » déployée par les Autorités d'Enregistrement pour leurs agences locales ; et une IGCP « utilisateur » pour le particulier citoyen/consommateur/professionnel.

Afin d'assurer une efficacité maximale pour un coût minimal en prenant le meilleur de chaque IGCP, l'IGCP « 2.0 » (en anglais *PKI2.0*) à 3 niveaux consiste à déployer : au troisième niveau (supérieur) une IGCP hiérarchique ... « reconnue » ... (ou ... « internationale ») sur un minimum d'acteurs ; au deuxième niveau (intermédiaire) autant d'IGCP hiérarchiques « internes » que d'Autorités d'Enregistrement (nombre limité d'acteurs) ; au premier niveau l'IGCP non hiérarchique « utilisateur » pour le particulier citoyen/consommateur/professionnel (très nombreux acteurs).

L'IGCP « 2.0 » à 3 niveaux définit donc une organisation nouvelle qui devient possible grâce à une architecture multi-niveaux d'une part, et aux protocoles cryptographiques de l'IGCP non hiérarchique « utilisateur » adressant les utilisateurs du premier niveau, d'autre part.

Selon l'invention, l'IGCP « 2.0 » préconise la mise en place au troisième niveau d'une IGCP hiérarchique « reconnue » qui a pour mission de délivrer et de gérer les certificats « serveur » des acteurs centraux.

Les acteurs centraux d'une architecture de gestion des identités sont les fournisseurs d'identité (IDP *IDentity Provider,* IP/STS *Identity ProviderlSecurity Token Service*), les fournisseurs d'attributs (AP *Attribute Provider*) et les fournisseurs de service (SP *Service Provider,* RP *Relying Party).* Ces acteurs doivent communiquer entre eux de façon sécurisée.

Ces acteurs centraux évoluent dans des cercles de confiance distincts. Les cercles de confiance sont par exemple : 1) le cercle Régalien, 2) le cercle Collectivités Territoriales, 3) le cercle Santé, 4) le cercle Banque, Finance et Assurance, 5) le cercle Internet et Télécommunication. Les cercles de confiance peuvent également être des cercles privés correspondant à une entreprise, à une organisation ou à un groupement de personnes ou d'éléments.

Selon l'invention, l'IGCP « 2.0 » préconise la mise en place au deuxième niveau d'Autorités d'Enregistrement (AE) qui ont pour mission d'intégrer les citoyens/consommateurs/professionnels dans le système. Elles servent d'intermédiaires de proximité dans chacun des cercles de confiance.

Les Autorités d'Enregistrement assurent deux fonctions principales : agent de proximité et tiers de confiance. Leur rôle est de délivrer les certificates « client » des citoyens/consommateurs/ professionnels. Les Autorités d'Enregistrement (AE) doivent remplir trois conditions. Premièrement, les AE doivent disposer d'agences de proximité suffisamment nombreuses et réparties de manière relativement uniforme sur le territoire et les différentes zones de population pour constituer de bons agents de proximité. Deuxièmement, les AE doivent pouvoir être reconnues et acceptées par le particulier citoyen/consommateur/ professionnel comme tiers de confiance (notoriété, respectabilité, reconnaissance légale). Troisièmement, les AE doivent être habilitées par chacun des cercles de confiance pour être un tiers de confiance dudit cercle.

L'IGCP « 2.0 » propose de mettre en place des réseaux d'Agences Locales d'Enregistrement (ALE) dans le monde réel, par cercle de confiance. Dans le cercle Régalien : les notaires de famille, les huissiers... Dans le cercle Collectivités Territoriales : les mairies, les bureaux de poste... Dans le cercle Santé : les caisses d'assurance maladie, les pharmacies... Dans le cercle Banque, Finance et Assurance : les agences bancaires, les cabinets d'agent d'assurance... Dans le cercle Internet et Télécommunication : les agences des opérateurs de télécommunication... Un cercle de confiance peut également être un cercle privé correspondant à une entreprise, à une organisation ou à un groupement de personnes ou d'éléments. Une Agence Locale d'Enregistrement peut être également itinérante et se déplacer sur des lieux de vie publiques, privés ou de travail pour procéder à l'enregistrement sécurisé des personnes ou des éléments.

Selon l'invention, l'IGCP « 2.0 » préconise la mise en place au premier niveau d'une IGCP non hiérarchique « utilisateur » pour servir les particuliers citoyens/consommateurs/professionnels.

Le protocole cryptographique de l'IGCP « utilisateur » s'affranchit d'une Autorité de Certification au profit d'un Notaire Electronique.

Dans le crypto-système de l'IGCP « utilisateur », le choix du type d'algorithme asymétrique est indifférent, qu'il soit fondé sur la factorisation des grands nombres en deux nombres premiers (« RSA », « Rivest Shamir Adleman »), sur des logiques d'empilements, le calcul de logarithmes discrets ou bien encore sur les courbes elliptiques (ECC, *Elliptic Curve Cryptography,* variante des logarithmes discrets). Toutefois, seuls des algorithmes de type RSA permettent de réaliser un chiffrement avec une clé privée selon un usage atypique de cette clé. Dans ce cas, il sera possible éventuellement de rendre le « certificat de propriété de clé publique » opaque. La structure particulière des clés dans les courbes elliptiques (scalaire pour la clé privée et point de la courbe pour la clé publique) ne permet pas un tel usage atypique de la clé privée. Dans ce cas, le scellement du « certificat de propriété de clé publique » ne pourra se faire que par signature.

Le protocole cryptographique de l'IGCP non hiérarchique « utilisateur » s'appuie : d'une part sur un certificat de clé publique auto-signé par l'utilisateur, c'est-à-dire signé avec sa propre clé privée et, d'autre part, sur un « certificat de propriété de clé publique » auto-scellé par l'utilisateur, c'est-à-dire, soit signé avec la clé privée de l'utilisateur, soit chiffré avec la clé privée de l'utilisateur selon un usage atypique de cette clé afin de le rendre opaque (à l'exception de son numéro).

Le modèle d'IGCP non hiérarchique selon l'invention diffère des systèmes non hiérarchiques connus (PGP et SPKI/SDSI) en ce qu'il n'existe pas de signatures d'autres utilisateurs dans le certificat de clé publique de l'utilisateur. Par ailleurs, ni dans PGP, ni dans SPKI/SDSI, il n'existe de « certificat de propriété de clé publique » auto-scellé par l'utilisateur selon l'invention.

Selon l'invention, classée dans la catégorie des modèles non hiérarchiques, les certificats de personne associant une clé publique à son propriétaire légitime (dits « certificats de clé publique ») sont consultables directement par tous les acteurs. Aucune Autorité de Certification n'est nécessaire puisque le certificat de personne est auto-signé. Cette auto-signature n'apporte bien sûr aucune garantie sur la validité du certificat de clé publique. Mais elle permet de rendre ce certificat conforme à la norme X.509v3 afin de pouvoir être utilisé par les applications existantes, écrites pour le modèle hiérarchique.

Contrairement à l'IGCP hiérarchique avec Autorité de Certification, un acteur est en mesure de s'assurer de la validité du certificat de clé publique d'une personne par la bonne exécution d'un protocole cryptographique entre cet acteur et le serveur du Notaire Electronique. Ce protocole implique directement l'usage de cette clé. Si le certificat de propriété est opaque, c'est la bonne ouverture, par la clé publique à vérifier, de ce certificat de propriété consultable en ligne dans la base/annuaire du Notaire Electronique et la vérification de son empreinte qui attestent au final la validité de cette même clé. Si le certificat de propriété est lisible, c'est la bonne vérification, par la clé publique à vérifier, de la signature de ce certificat de propriété consultable en ligne dans la base/annuaire du Notaire Electronique et la vérification de son empreinte qui attestent au final la validité de cette même clé.

Dans les IGCP hiérarchiques, le certificat de personne doit être au préalable signé par une Autorité de Certification (AC) ayant son propre certificat « racine » pré-embarqué dans les navigateurs Internet. Si l'AC signataire est exotique et non reconnue, l'acteur n'est pas en mesure de vérifier la validité de la clé publique présentée dans le certificat de personne. Selon une source Wikipedia®, « Les certificats racines sont des clés publiques non signées, ou auto-signées, mais dignes de confiance. Des autorités de certification commerciales détiennent des certificats racines présents dans de nombreux logiciels, comme par exemple les navigateurs tels que Internet Explorer® ou Firefox® contiennent des certificats racines pré-installés. Quand le navigateur ouvre une connexion sécurisée (SSL/TLS) à un site ayant acheté une certification auprès d'une autorité reconnue, il considère que le site est sûr, et le passage en mode sécurisé est transparent. Si le certificat est auto-signé (autorité de certification et créateur de la clé publique ne font qu'un), le navigateur propose de l'examiner, puis de l'accepter ou de le refuser selon la confiance qu'on lui accorde. »

Selon l'invention, l'IGCP non hiérarchique « utilisateur » propose que tout acteur connecté à Internet soit en mesure de vérifier la validité d'une clé publique proposée ou récupérée. Pour cela, l'acteur doit interroger le Notaire Electronique (spécifié dans le certificat de clé publique) en émettant une requête sur le serveur Notaire Electronique (dont l'adresse est spécifiée dans le certificat de clé publique) en ligne.

En cas d'indisponibilité temporaire du serveur du Notaire Electronique contenant le « certificat de propriété de clé publique » correspondant, le système n'est pas bloqué pour autant bien que la réponse de sécurité soit différée. En effet, rien n'empêche un acteur d'utiliser quand même la clé publique d'une personne, s'il décide de lui faire confiance. Il peut par exemple chiffrer un message à l'intention de cette personne ou bien vérifier un document, un message ou une transaction signée par cette même personne.

A l'échelle d'un pays comme la France, l'IGCP « 2.0 » réduit à quelques dizaines le nombre de serveurs Notaire Electronique à administrer et à protéger afin d'assurer l'infrastructure globale des clés publiques des personnes sur les plans de l'e-commerce (B *to* C), de l'e-administration et des échanges privés. C'est à la fois un nombre suffisant pour éviter une attaque d'envergure concentrée sur un seul point et suffisamment faible pour ne pas compliquer la gestion de l'ensemble.

Aujourd'hui, il est déjà possible d'assurer un niveau très élevé de disponibilité et d'intégrité des serveurs stratégiques, comme c'est déjà le cas pour les serveurs des grands acteurs du Web. Il n'existe donc pas de surcoût d'infrastructure lié à l'innovation présentée.

Dans le cas de l'IGCP non hiérarchique « utilisateur », les clés et les certificats concernent individuellement les personnes physiques. On parle communément de certificats « client » ou de « certificats de personne » afin de les distinguer des certificats « serveur ». Selon les termes du Référentiel Général de la Sécurité (RGS) édité par l'Agence Nationale de la Sécurité des Systèmes d'Information (ANSSI), « Un certificat électronique « serveur » est un fichier électronique attestant qu'une bi-clé [clé privée et sa clé publique associée] appartient à l'autorité administrative identifiée directement ou indirectement, dans le certificat. Il est délivré par une Autorité de Certification. En signant le certificat, l'Autorité de Certification valide le lien entre l'autorité administrative, le nom de domaine internet du serveur et la bi-clé. Le certificat est valide pendant une durée donnée précisée dans celui-ci. Ce certificat « serveur » et cette bi-clé vont permettre au serveur les possédant et agissant pour le compte de cette autorité administrative de s'authentifier vis à vis d'un poste "usager" (SSL/TLS en mode client/serveur) ou d'un autre serveur (services Web). Dans ce contexte le terme serveur ne désigne pas la machine elle-même mais le serveur applicatif ou le service ou le télé-service fonctionnant sur une machine. » Dans une IGCP hiérarchique, selon les termes du Référentiel Général de la Sécurité (RGS) : « Un certificat électronique "particulier" est un fichier électronique attestant qu'une bi-clé appartient à la personne physique identifiée directement ou indirectement (pseudonyme) dans le certificat. Il est délivré par une Autorité de Certification. En signant le certificat, l'autorité de certification valide le lien entre l'identité du particulier et la bi-clé. Le certificat est valide pendant une durée donnée précisée dans celui-ci. »

Dans le cadre de la présente invention, les personnes physiques concernées sont des citoyens/consommateurs/professionnels, c'est-à-dire des particuliers.

Par exemple, en cas de déploiement de la présente invention en France, au niveau du cercle régalien, ce particulier doit être un citoyen français. Un étranger devra être enrôlé par l'Autorité d'Enregistrement régalienne de son pays d'origine. Pour les cercles « Banque, Finance et Assurance » et « Internet et Télécommunication », la notion de proximité devient la règle. Pour les citoyens de l'Union Européenne, la possession d'un compte bancaire dans une banque française ou d'un contrat auprès d'un opérateur de télécommunication français suffit à légitimer son enrôlement par l'Autorité d'Enregistrement correspondante. La présente invention est susceptible d'être appliquée dans n'importe quel pays mais aussi, par extension, dans n'importe quelle communauté.

La présente invention ne change, pas l'usage des clés cryptographiques. Les clés privées et les certificats de clé publique d'une personne vont lui permettre : de s'authentifier auprès d'un serveur (serveur applicatif, service ou télé-service fonctionnant sur une machine) ; de chiffrer un document pour en assurer la confidentialité à l'égard de tous, excepté lui-même ; de signer un document, une transaction ou un message. Les clés publiques et les certificats de clé publique des autres personnes vont permettre à une personne donnée : d'authentifier un autre particulier, un employé, un agent ou un serveur ; de chiffrer un document, une transaction ou un message à destination d'un autre particulier, d'un employé, d'un agent ou d'un serveur (confidentialité) ; de vérifier la signature apposée sur un document, une transaction ou un message par un autre particulier, un employé, un agent ou un serveur.

Au delà du citoyen/consommateur, ce système s'étend à des personnes physiques d'autres entités. Pour les entreprises, des certificats de propriété de clé publique de mandataires sociaux, de comptables, de trésoriers, de responsable de paye, etc. peuvent être délivrés par les Greffes de Tribunaux de Commerce. Pour les commerçants et artisans, ils pourront être délivrés par La chambre des Métiers. Pour les professions libérales, ils seraient délivrés par la chambre des Métiers ou les ordres professionnels (avocats, experts comptables, commissaires aux comptes, médecins, etc.). Pour les salariés ou fonctionnaires, lorsqu'ils interviennent nominativement (et non pas dans le cadre de leur fonction respective) ils seraient délivrés par les Prud'hommes ou encore la Sécurité Sociale.

Au delà du citoyen/consommateur/professionnel, ce système peut également être appliqué à d'autres entités ou éléments que des personnes physiques comme des animaux, des plantes, des machines, des appareils et des objets. Bien sûr, l'enrôlement de ces éléments ne nécessitera pas forcément la vérification d'une pièce d'identité mais plutôt celle d'une identification.

Le cycle de vie d'une clé et des certificats de personne associés comporte plusieurs phases : 1) Demande, 2) Génération, 3) Affectation, 4) Introduction, 5) Utilisation, 6) Fin de vie, 7) Renouvellement et 8) Recouvrement.
1) Demande. Le particulier doit demander de façon explicite ou implicite la création pour son usage personnel de clés cryptographiques et des certificats correspondants. Cette demande correspond au début du cycle de vie d'une clé et d'un certificat. La formalisation de cette demande peut être utile au suivi de la clé ou du certificat dans son cycle de vie. Le particulier n'a pas forcément conscience de l'intérêt ou l'utilité posséder des clés et des certificats cryptographiques pour profiter des services d'Internet. La notion de « clé de sécurité pour Internet » est peut-être plus simple à comprendre. Cette demande correspond à une démarche volontaire de la part du particulier. Elle peut toutefois être proposée à l'utilisateur lors d'un passage dans une Agence Locale d'Enregistrement (ALE), par exemple lors de la souscription à un abonnement de téléphonie mobile. A cette occasion, le téléphone mobile, le « smartphone » ou la tablette peuvent devenir le support de stockage privilégié du certificat de clé publique et de la clé privée de l'utilisateur.
2) Génération. L'opération de génération des clés dépend des algorithmes cryptographiques utilisés. Celle des certificats dépend des normes adoptées. La génération des clés peut être effectuée de façon individuelle, décentralisée ou centralisée. Génération individuelle : le particulier utilise localement un outil logiciel mis à sa disposition dans le sélecteur d'identité de son ordinateur, dans son téléphone mobile ou son « smartphone ». Génération décentralisée : le particulier se rend physiquement à son Agence Locale d'Enregistrement (ALE) qui procède pour le compte du particulier à la génération de ses clés. Génération centralisée : une Autorité d'Enregistrement commune à tous les particuliers - une au moins par cercle de confiance - génère les clés de chaque particulier et se charge de leur délivrer. La génération individuelle est privative avec un contrôle total du particulier. L'absence de connexion avec Internet est recommandée pendant le processus de génération. Elle nécessite toutefois des utilisateurs avertis. La génération décentralisée est effectuée dans un environnement de confiance. Le particulier est néanmoins présent lors du processus de génération. Dans ce cas, le particulier doit faire confiance à un tiers (l'ALE par délégation de son Autorité d'Enregistrement) pour la génération de ses éléments secrets et privés. La génération centralisée est effectuée sans aucun contrôle du particulier. Ce schéma n'est pas idéal pour rassurer les particuliers. De plus, l'opération de délivrance des clés (une fois générées) à chaque particulier implique une logistique lourde et coûteuse. Cette procédure n'apparaît pas la plus optimale, ni pour la perception utilisateur, ni pour le coût de mise en place.
   La génération de clé aléatoire peut se faire de deux façons : indirectement par le procédé de dérivation de clé, directement par un générateur d'aléa. La dérivation de clé consiste à utiliser un procédé cryptographique pour obtenir à partir d'une clé dite maître et d'éléments publics d'identification de l'utilisateur final une clé secrète ou privée. Ce procédé est déconseillé car il affaiblit la sécurité (la sécurité est alors limitée à l'entropie et à la complexité de la clé maître qui est en général un mot de passe mémorisable donc plutôt court et faible).
   La génération de clé aléatoire consiste à utiliser un générateur d'aléa pour fabriquer selon un procédé cryptographique les clés secrètes, privées et publiques. En prenant bien soin d'être hors ligne, c'est-à-dire déconnecté de tout réseau et d'Internet, le particulier, qui sera appelé par exemple Alice, utilise ce programme pour générer chez lui (ou à l'Agence Locale d'Enregistrement) sa paire de clés ou bi-clé : une privée et une publique : KₚᵣᵢA et K_{pub}A, où A correspond à Alice, Kₚᵣᵢ à la clé privée et K_{pub} à la clé publique.
3) Affectation. Une fois une clé cryptographique générée, son admission dans le système d'information est une opération cruciale en termes de sécurité. Cette opération associe à une valeur numérique l'identité du particulier auquel elle est affectée et l'usage qui lui est dévolu (signature, chiffrement, échange de clé...). Pour des raisons de sécurité, la séparation des usages authentification et signature est recommandée.

L'IGCP non hiérarchique « utilisateur » préconise, pour chaque particulier, le stockage sur un support physique d'authentification et de signature de deux couples de bi-clé : le premier pour l'authentification (avec présomption de fiabilité) ; le second pour la signature électronique afin de valider une transaction en marquant son consentement.

Les deux clés privés sont stockées de façon sécurisée : soit en étant chiffrées et stockées dans une mémoire à accès libre, soit en étant stockées en clair dans une mémoire sécurisée avec contrôle d'accès, soit en étant stockées chiffrées dans une mémoire sécurisée avec contrôle d'accès. Ce dernier cas étant préférable.

Les certificats de clé publique X.509v3 auto-signés sont stockés en clair. Le premier est un certificat d'authentification. Le second est un certificat de signature dont la valeur juridique découle de la Directive Européenne 1999/93.

L'opération d'affectation devient cruciale lorsqu'il s'agit de la première admission dans le système. Dans ce cas, il s'agit du premier enrôlement du particulier dans un système. Comme le stipule l'ANSSI dans le RGS : « La sécurité de l'opération ne peut résulter que de procédés non cryptographiques, de nature physique et organisationnel. C'est lors de ce premier enrôlement que seront affectés au particulier les premiers éléments cryptographiques permettant ultérieurement de le reconnaître de façon sûre et de lui affecter de nouvelles clés. » C'est bien ce à quoi s'attache la présente invention, afin de garantir un enrôlement dit en « face à face » et non de façon distante par télécommunication ou par correspondance.

L'opération de génération des certificats dépend des normes adoptées. La génération des certificats peut aussi être effectuée de façon individuelle, décentralisée ou centralisée. Génération individuelle : pour le certificat de clé publique qui n'est plus signé par une Autorité de Certification, le particulier utilise localement un outil logiciel certifié et mis à sa disposition dans le sélecteur d'identité de son ordinateur ou dans son mobile. Génération décentralisée : le particulier se rend physiquement à son Agence Locale d'Enregistrement qui procède pour le compte de ce particulier à la création de son certificat de clé publique et de son « certificat de propriété de clé publique ». Génération centralisée : une Autorité d'Enregistrement commune à tous les particuliers - au moins une par cercle de confiance - génère les certificats de chaque particulier et se charge de leur délivrer.

L'IGCP non hiérarchique « utilisateur » ne préconise pas la procédure centralisée pour trois raisons : elle est effectuée sans aucun contrôle du particulier (ce schéma n'est pas fait pour rassurer les particuliers) ; l'opération de délivrance des certificats (une fois créés) à chaque particulier implique une logistique lourde et coûteuse ; il est difficile pour le particulier de prouver son identité à l'Autorité d'Enregistrement, éloignée géographiquement. En effet, l'envoi courrier de photocopies des pièces d'identité, l'envoi courriel d'une version numérisée des pièces d'identité, ainsi que la télécopie des pièces d'identité peuvent être facilement compromis.

La procédure individuelle permet bien de créer un certificat de clé publique auto-signé, mais non pris en charge par une Autorité de Certification comme cela prévu dans le protocole IGCP « utilisateur ». Elle ne permet pas de créer un « certificat de propriété de clé publique ». Elle ne permet pas surtout de l'introduire dans le système car il ne peut pas être publié sur un serveur Notaire Electronique. L'IGCP « utilisateur » ne préconise pas cette procédure.

La procédure décentralisée permet de créer un certificat de clé publique auto-signé, non signé par une Autorité de Certification comme cela est prévu dans le protocole IGCP « utilisateur ». Elle permet également de créer un « certificat de propriété de clé publique » avec vérification de son authenticité. Elle permet en outre son introduction dans le système (publication sur le serveur Notaire Electronique). L'IGCP « utilisateur » préconise cette procédure.

Le particulier (Alice) se rend physiquement à son Agence Locale d'Enregistrement (ALE). C'est là qu'Alice va pouvoir obtenir deux certificats : son certificat de clé publique et son « certificat de propriété de clé publique ».

La présente invention propose un processus en trois étapes.

Première étape, le particulier Alice présente une ou plusieurs pièces d'identité (passeport, Carte Nationale d'Identité, permis de conduire...) à l'agent d'enregistrement qui les valide et authentifie physiquement Alice. Cette étape de vérification d'identité est indispensable pour établir un vrai système de confiance. A contrario, une IGCP « reconnue » (ou « internationale ») peut difficilement proposer cette démarche physique à tous car elle ne dispose pas d'agences locales d'enregistrement de proximité réparties sur tout le territoire.

Deuxième étape, le particulier Alice utilise le programme (certifié) de certification de l'Agence Locale d'Enregistrement (ALE) pour générer son certificat de clé publique. Ce certificat est lisible et auto-signé par la clé privée d'Alice.

Ce certificat de clé publique contient notamment : {numéro de série, nationalité du tiers (par exemple FR), type de tiers (= Autorité d'Enregistrement), nature du tiers (par exemple Banque, Assurance ou Opérateur de télécommunication...), cercle de confiance du tiers, identité du tiers, identité de l'ALE, URL du serveur Notaire Electronique du tiers, horodatage, identité d'Alice, K_{pub}A, + signature de l'ALE + auto-signature}. Ce certificat respecte le format X.509v3 pour être compatible avec le standard international.

Troisième étape, le particulier Alice utilise le programme (certifié) de l'Agence Locale d'Enregistrement (ALE) pour garantir la propriété légitime de sa clé publique qu'Alice a apportée dans sa clé USB, sa carte à puce ou son mobile (procédure de génération individuelle), ou qu'Alice vient juste de générer à l'ALE (procédure de génération décentralisée). L'agent d'enregistrement saisit dans le programme l'identité du particulier Alice (par exemple les nom et prénom(s) d'Alice, ses date et lieu de naissance, sa nationalité) et précise les emplacements respectifs de la clé publique et de la clé privée d'Alice (en pointant sur les fichiers correspondants dans la clé USB, la carte à puce ou le mobile d'Alice).

Le programme calcule l'empreinte (e) de la clé publique d'Alice avec de façon classique une fonction de hachage à sens unique telle que RIPE-MD ou SHA-256 ou bien, avec de façon atypique tout autre moyen d'obtenir une valeur représentative de la clé publique d'Alice sans pour autant la dévoiler : H(K_{pub}A) = e_{pub}A, avec H la fonction de hachage à sens unique ou toute autre fonction de calcul d'une valeur représentative.

Le certificat de propriété de clé publique est alors composé de la manière suivante : {numéro de série, nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A).

Ce certificat de propriété est ensuite scellé avec la clé privée d'Alice, soit par signature, soit par chiffrement avec usage atypique de la clé privée qui le rend opaque (c'est-à-dire chiffré avec la clé privée d'Alice), laquelle clé privée est stockée dans sa clé USB, sa « SD-card », sa carte-à-puce, son téléphone mobile, son « smartphone » ou tout autre dispositif de stockage adapté à ce besoin, et jamais montrée à l'agent d'enregistrement.

L'IGCP « utilisateur » établit la responsabilité du particulier (citoyen/consommateur/professionnel) et dispose que le particulier certifie lui-même la propriété de sa clé publique, sous le contrôle d'une Autorité d'Enregistrement (représentée par son Agence Locale d'Enregistrement) mais sans l'intervention d'une quelconque Autorité de Certification.

Cela donne, si l'on prend l'option de chiffrement avec un algorithme asymétrique de type RSA : E (KₚᵣᵢA, {nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A}). Le certificat est désormais composé comme suit : numéro de série + [nationalité du tiers (FR), type de tiers (Autorité d'Enregistrement), nature du tiers, cercle de confiance du tiers, identité du tiers, identité de l'ALE, horodatage, identité d'Alice, e_{pub}A]. Notation : E algorithme de chiffrement asymétrique ; { } signifie un certificat ouvert et lisible ; [ ] signifie un certificat opaque et scellé (c'est-à-dire chiffré donc illisible en l'état).

Cela donne, si l'on prend l'option de signature avec un algorithme asymétrique de type RSA : Sig (KₚᵣᵢA, {numéro de série, nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A} ). Le certificat est désormais composé comme suit : numéro de série + {nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A} + auto-signature. Notation : Sig algorithme de signature (asymétrique) ; { } signifie un certificat ouvert, lisible et scellé (c'est-à-dire signé).

Cela donne avec un algorithme asymétrique de type ECC (courbes elliptiques) : Sig (KₚᵣᵢA, {numéro de série, nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A} ). Le certificat est désormais composé comme suit : numéro de série + {nationalité du tiers (par exemple FR), type de tiers (= Autorité d'Enregistrement), nature du tiers, cercle de confiance du tiers, identité du tiers, identité de l'ALE, horodatage, identité d'Alice, e_{pub}A} + auto-signature. Notation : Sig algorithme de signature (asymétrique) ; { } signifie un certificat ouvert, lisible et scellé (c'est-à-dire signé).

Suivant la structure mathématique des algorithmes asymétriques utilisés autres que RSA et ECC, il sera possible, soit de signer ou de chiffrer comme dans le cas du RSA, soit uniquement de signer comme dans le cas des ECC.

La présente invention institue un « certificat de propriété de clé publique » de particulier personne physique avec les caractéristiques suivantes : il ne contient pas la clé publique de ce particulier mais seulement l'empreinte de cette clé ; il est scellé avec la propre clé privée du particulier et n'est pas signé avec la clé privée d'une quelconque Autorité de Certification.
4) Introduction. Selon le RGS de l'ANSSI, « Une fois que son rôle a été correctement défini, un autre aspect de la gestion d'une clé consiste à l'introduire physiquement ou logiquement dans l'ensemble du système applicatif. Cet aspect recouvre la distribution et le transport de la clé jusqu'à l'utilisateur ou à l'équipement, puis son injection éventuelle dans l'environnement de confiance du particulier. L'introduction est donc l'opération qui fait passer la clé affectée du système de gestion de clés proprement dit au système applicatif qui va l'utiliser. »
   Le particulier possède maintenant sa clé privée et son certificat de clé publique sur son ou ses supports de clés.
   La présente invention crée un module automatique, intégré au sélecteur d'identité ou au programme certifié de l'ALE, qui a pour fonction de publier auprès des fournisseurs d'identité et des annuaires la nouvelle clé publique (certificat de clé publique) du particulier afin d'intégrer rapidement la confiance dans sa vie numérique.
   Selon la présente invention, l'agent d'enregistrement, membre de l'ALE, a pour tâche de publier le « certificat de propriété de clé publique » du particulier sur le serveur Notaire Electronique de l'Autorité d'Enregistrement à laquelle il appartient.
   Selon la présente invention, le serveur Notaire Electronique contient un annuaire centralisé (ou une base de données) de tous les « certificats de propriété de clé publique » des particuliers servis par le réseau de proximité de ses Agences Locales d'Enregistrement.
   Selon la présente invention, chacun des enregistrements de cette base comprend une valeur d'index du certificat (le numéro du certificat), le certificat de propriété de clé publique et une empreinte des deux valeurs précédentes chiffrée par la clé privée du Notaire Electronique. Cette clé privée du Notaire Electronique est liée à un certificat émis par l'Autorité de Certification interne de l'Autorité d'Enregistrement à laquelle le serveur appartient. Cette signature permet de préserver l'intégrité de l'annuaire. Dans ces conditions, la clé publique de chacun des serveurs Notaire Electronique (certifiée par une autorité de certification reconnue) permet alors de vérifier qu'un enregistrement de sa base/annuaire est bien authentique et non un ajout ou une substitution effectué frauduleusement par un pirate.
   Selon la présente invention, l'ensemble de l'annuaire ou base de données de tous les « certificats de propriété de clé publique » du serveur Notaire Electronique peut aussi être signé avec sa clé privée après chaque mise à jour légitime, ce qui rend la suppression ou la modification malveillante d'un certificat de propriété existant et l'ajout d'un certificat de propriété frauduleux difficiles.
   Selon la présente invention, l'agent d'enregistrement fait partie de l'IGCP hiérarchique « interne » de son Autorité d'Enregistrement. Ce qui lui permet de signer son envoi au serveur Notaire Electronique qu'il a préalablement authentifié, afin de publier le « certificat de propriété de clé publique » du particulier en toute sécurité. Le Notaire Electronique ne publie donc que des « certificats de propriété de clé publique » de particuliers émis par ses propres agents d'enregistrement autorisés. Par exemple, une IGCP « interne » existe déjà pour les Notaires de France (cercle Régalien).
   La sécurité des échanges entre l'ALE et son serveur Notaire Electronique est assuré en ce que : a) Le serveur Notaire Electronique est authentifié par l'ALE grâce au certificat de clé publique dudit serveur, délivré par lui-même (IGCP interne) ; b) L'ALE est authentifiée par le serveur Notaire Electronique grâce au certificat de clé publique de ladite ALE, délivré par l'Autorité d'Enregistrement (IGCP interne); c) La confidentialité des échanges est obtenue par le chiffrement des données transmises, par exemple grâce au protocole TLS 1.x (*Transport Layer Security,* norme de sécurisation par chiffrement du transport de l'information au sein des réseaux informatiques, anciennement SSL *Secure Socket Layer*), initié par le serveur.
5) Utilisation. Selon le RGS de l'ANSSI, « De par leur nature même, les éléments privés ou secrets ne peuvent être employés que dans un environnement de confiance. Cet environnement est en effet responsable du stockage des clés et de leur bonne gestion pendant la durée où elles sont utilisées. Il peut en découler notamment des exigences quant à la protection de l'environnement de confiance applicatif.» Il existe trois types d'utilisation des clés : chiffrement/ déchiffrement pour la confidentialité, signature électronique, authentification (par cryptographie asymétrique, par mot de passe à usage unique ou *One Time Password,* OTP).

Déroulement du processus de chiffrement/déchiffrement pour la confidentialité dans la présente invention. Selon la présente invention, on prévoit un module de requête qui prend en entrée le certificat de clé publique de la personne physique, interroge le serveur Notaire Electronique dont l'adresse (par exemple URL) figure dans ledit certificat de clé publique, en communiquant le numéro de ce certificat de clé publique et le certificat de clé publique, et qui reçoit en retour de la part du serveur Notaire Electronique dont l'adresse figure dans ledit certificat de clé publique une assertion sur l'authenticité ou la non-authenticité du certificat de clé publique présenté et une assertion sur l'authenticité ou la non-authenticité de la prétendue clé publique de la personne physique.

Selon la présente invention, le module de requête est placé par exemple dans les navigateurs Internet, les logiciels de messagerie électronique, les serveurs fournisseurs d'identité (IDP, IP/STS), les applications informatiques, les processus informatiques. Selon un mode de réalisation, les navigateurs internet, les logiciels de messagerie électronique, les serveurs fournisseurs d'identité ((IDP et les IP/STS), les applications informatiques, les processus informatiques, embarquent les certificats de clé publique des serveurs notaire électronique légitimes.

Selon la présente invention, on prévoit un module de réponse qui est installé sur tous les serveurs Notaire Electronique (NE), qui reçoit en entrée la requête du module de requête, qui recherche dans la base de données dudit serveur NE s'il existe un numéro de « certificat de propriété de clé publique » identique au numéro de certificat de clé publique reçu et qui délivre une assertion « la clé publique n'est pas authentique » si le résultat de la recherche est négatif.

Selon la présente invention, on prévoit un module de réponse qui est installé sur tous les serveurs Notaire Electronique (NE), qui reçoit en entrée la requête du module de requête, qui recherche dans la base de données dudit serveur NE s'il existe un numéro de certificat de propriété de clé publique identique au numéro de certificat de clé publique reçu, en ce que si le résultat de la recherche est positif, ce module de réponse fait soit une tentative de déchiffrement du « certificat de propriété de clé publique » trouvé s'il est opaque avec la clé publique reçue et délivre une assertion « la clé publique n'est pas authentique » si le déchiffrement ne réussit pas ou une assertion « la clé publique est authentique» si le déchiffrement réussit, soit une vérification de la signature du « certificat de propriété de clé publique » trouvé s'il est lisible avec la clé publique reçue et délivre une assertion « la clé publique n'est pas authentique » si la vérification échoue ou une assertion « la clé publique est authentique» si la vérification réussit.

Selon la présente invention, on prévoit un module de réponse qui est installé sur tous les serveurs Notaire Electronique (NE), qui reçoit en entrée la requête du module de requête qui recherche dans la base de données dudit serveur notaire électronique s'il existe un numéro de certificat de propriété de clé publique identique au numéro de certificat de clé publique reçu, en ce que si le résultat de la recherche est positif, ledit module de réponse fait soit une tentative de déchiffrement du « certificat de propriété de clé publique » trouvé s'il est opaque avec la clé publique reçue, soit une vérification de la signature du « certificat de propriété de clé publique » trouvé s'il est lisible avec la clé publique reçue, en ce que respectivement soit si le déchiffrement réussit, soit si la vérification de la signature réussit, ledit module de réponse calcule l'empreinte de la clé publique reçue, puis la compare avec l'empreinte de la clé publique stockée dans le certificat de propriété de clé publique préalablement déchiffré et en ce que ledit module de réponse délivre une assertion « la clé publique n'est pas authentique », si les deux empreintes sont différentes ou une assertion « la clé publique est authentique », si les deux empreintes sont identiques.

Voici les étapes selon l'invention, lorsque qu'un particulier, appelé Bernard, ou un fournisseur de service (SP/RP) souhaite envoyer un message secret à un autre particulier appelé Alice.

Bernard se procure le certificat de clé publique d'Alice : soit en consultant un fournisseur d'identité (IDP/IP) de son cercle de confiance, soit en consultant un des annuaires de certificats de clé publique où Alice l'a déjà publié, soit directement auprès d'Alice. Bernard doit maintenant s'assurer que cette clé publique « K_{pub}X » écrite dans le certificat de clé publique d'Alice est bien celle d'Alice et qu'un pirate n'est pas déjà passé par là pour substituer sa propre clé publique à celle d'Alice (ou bien par la fameuse attaque de l'intercepteur dite encore « *man-in-the-middle* »). Bernard récupère d'abord le numéro du certificat et la clé publique « K_{pub}X » lisible dans le certificat, prétendument celle d'Alice. Bernard envoie une requête en temps réel au serveur du Notaire Electronique (NE) indiqué dans le certificat de clé publique pour consulter le « certificat de propriété de clé publique » d'Alice qui y est normalement stocké. S'il n'existe pas de « certificat de propriété de clé publique » d'Alice sur le serveur NE indiqué (aucune correspondance du numéro de certificat dans la base ou l'annuaire), la validité de la clé publique d'Alice en possession de Bernard n'est pas prouvée. Si le « certificat de propriété de clé publique » d'Alice existe bien sur le serveur NE indiqué (correspondance du numéro de certificat dans la base ou l'annuaire), ce certificat est soit opaque, soit lisible. La requête envoyée par Bernard va utiliser « K_{pub}X » pour tenter de l'ouvrir s'il est opaque ou de vérifier sa signature s'il est lisible. Si la clé publique (_{Kpub}X) récupérée dans le certificat de clé publique d'Alice est bien la clé publique originale d'Alice (K_{pub}A) alors le « certificat de propriété de clé publique » s'ouvre s'il est opaque, contrairement à n'importe quelle autre clé publique fallacieuse qui ne pourra pas ouvrir ce certificat, ou bien voit sa signature vérifiée s'il est lisible.

Selon la présente invention, le module serveur calcule alors l'empreinte de la clé publique reçue dans la requête : H(K_{pub}X) = e_{pub}X. Cette valeur est ensuite comparée à l'empreinte stockée dans le « certificat de propriété de clé publique » d'Alice qui vient d'être ouvert ou dont la signature vient d'être vérifiée. Si les deux empreintes sont égales (e_{pub}X = e_{pub}A) alors la réponse à la requête de Bernard spécifie que la clé publique envoyée dans sa requête est bien la clé publique originale d'Alice, "certifiée" (scellée pour être exact) par elle-même et garantie par le serveur du Notaire Electronique.

Ainsi, Bernard est vraiment sûr qu'il a bien récupéré la clé publique authentique d'Alice. Il ne lui reste plus qu'à chiffrer son message secret pour Alice avec la clé publique authentique d'Alice et s'en remettre avec confiance au fait que seule Alice possède bien l'unique clé privée (KₚᵣᵢA) capable de déchiffrer correctement son message. La confidentialité du message de Bernard pour Alice est alors garantie.

La sécurité des échanges entre le client requêteur et le serveur Notaire Electronique (NE) est assuré en ce que : a) Le serveur NE est authentifié par le client grâce au certificat de clé publique dudit serveur, délivré par une Autorité de Certification reconnue ; b) La confidentialité des échanges est obtenue par le chiffrement des données transmises, par exemple grâce au protocole TLS 1.x, initié par le serveur ; c) L'intégrité de l'URL du serveur NE contenue dans le certificat de clé publique est vérifiable par la signature dudit certificat.

Déroulement du processus de signature électronique dans la présente invention.

Voici les étapes selon l'invention, lorsque qu'un acteur (un particulier, appelé Bernard, ou un fournisseur de service (SP/RP) souhaite vérifier la signature d'un autre particulier appelé Alice. Cette entité a besoin de la clé publique authentique d'Alice afin de vérifier sa signature sur une transaction. Cette transaction a été horodatée et signée avec la clé privée d'Alice. L'entité se procure le certificat de clé publique d'Alice : soit en consultant un fournisseur d'identité (IDP/IP) de son cercle de confiance, soit en consultant un des annuaires de certificats de clé publique où Alice l'a déjà publié, soit directement auprès d'Alice. L'entité doit maintenant s'assurer que cette clé publique « K_{pub}X » écrite dans le certificat de clé publique d'Alice est bien celle d'Alice et qu'un pirate n'est pas déjà passée par là pour substituer sa propre clé publique à celle d'Alice (ou bien par la fameuse attaque de l'intercepteur dite encore « *man-in-the-middle* »).

Le processus de vérification de la validité de la clé publique d'Alice est exactement le même que celui détaillé dans le cas précédent. A l'issue de ces étapes, l'entité est vraiment sûre qu'elle a bien récupéré la clé publique authentique d'Alice. Il ne reste plus à l'entité qu'à vérifier la signature d'Alice avec la clé publique authentique d'Alice et s'en remettre avec confiance au fait que seule Alice possède bien l'unique clé privée (KₚᵣᵢA) capable d'avoir signé correctement la transaction en question. La signature de la transaction par Alice est alors garantie.

Déroulement du processus d'authentification d'Alice à l'aide de la cryptographie asymétrique dans la présente invention.

Voici les étapes selon l'invention, lorsque qu'un acteur (un particulier, appelé Bernard, ou un fournisseur de service (SP/RP) souhaite vérifier la signature d'un autre particulier appelé Alice. Cette entité a besoin de la clé publique authentique d'Alice afin de vérifier le chiffrement opéré par la clé privée d'Alice lors d'un protocole défi-réponse. Après une première phase d'identification d'Alice auprès du serveur de l'entité, le serveur envoie un aléa (le défi) à Alice qui le chiffre avec sa clé privée (KₚᵣᵢA) pour obtenir la réponse qu'elle envoie au serveur. Pour déchiffrer la réponse obtenue et retrouver son défi d'origine, le serveur a besoin de la clé publique d'Alice. L'entité se procure le certificat de clé publique d'Alice : soit en consultant un fournisseur d'identité (IDP/IP) de son cercle de confiance, soit en consultant un des annuaires de certificats de clé publique où Alice. l'a déjà publié, soit directement auprès d'Alice. L'entité doit maintenant s'assurer que cette clé publique « K_{pub}X » écrite dans le certificat de clé publique d'Alice est bien celle d'Alice et qu'un pirate n'est pas déjà passée par là pour substituer sa propre clé publique à celle d'Alice (ou bien par la fameuse attaque de l'intercepteur dite encore « *man-in-the-middle* »).

Le processus de vérification de la validité de la clé publique d'Alice est exactement le même que celui détaillé dans le cas précédent. A l'issue de ces étapes, l'entité est vraiment sûre qu'elle a bien récupéré la clé publique originale d'Alice. Il ne reste plus à l'entité qu'à déchiffrer la réponse (au défi) envoyée par Alice avec la clé publique originale d'Alice. Si la valeur ainsi déchiffrée est la même valeur que l'aléa (le défi) envoyé au préalable, alors l'entité peut être sûre que seule Alice possède bien l'unique clé privée (KₚᵣᵢA) capable d'avoir chiffré correctement le défi pour en faire une réponse valable. Alice est bien authentifiée par l'entité.
6) Fin de vie. Selon le RGS de l'ANSSI, « La fin de vie d'une clé cryptographique donne lieu à une révocation, un retrait, voire une destruction. Révoquer une clé n'est pas synonyme de retrait en ce sens qu'une clé peut avoir été révoquée et continuer d'être utilisée pour des opérations de vérification ou de compatibilité ascendante. De même le retrait ne signifie pas forcément que la clé ne sera plus jamais utilisée : elle peut être archivée pour permettre, par exemple, de mener une enquête postérieurement à son retrait. » Selon la présente invention, un certificat de propriété de clé publique est émis sans durée de fin de validité. Tant qu'il est présent sur le serveur du Notaire Electronique, il est considéré comme valide et peut être consulté en ligne par quiconque (fournisseurs d'identité, organisation, particuliers) pour s'assurer de la valeur de la clé publique et de son appartenance à la bonne personne. Selon la présente invention, le particulier retrouve la maîtrise de ses éléments de sécurité et redevient responsable de son identité. Personne d'autre que lui n'est en droit de mettre fin à ce certificat de propriété.
   Le problème récurrent de la gestion complexe des listes de certificats révoqués (*Certificate Revocation List, CRL*) dans l'IGCP hiérarchique ne se pose plus dans la nouvelle IGCP présentée. En cas de perte, de compromission ou de vol de sa clé privée, le particulier doit bien évidemment réagir en demandant le plus tôt possible auprès de son Agence Locale d'Enregistrement la suppression de la publication de son certificat de propriété sur le serveur Notaire Electronique.
7) Renouvellement. Selon le RGS de l'ANSSI, « Le renouvellement d'une clé cryptographique est un processus à prévoir dès la conception d'un système d'information. Ce renouvellement peut intervenir de façon normale ou provoquée par des événements fortuits comme une compromission. » Selon la présente invention, en cas de perte, de compromission ou de vol de sa clé privée, le particulier doit d'abord demander auprès de son Agence Locale d'Enregistrement (ALE) la suppression de la publication de son « certificat de propriété de clé publique » sur le serveur Notaire Electronique. Seule une ALE liée au Notaire Electronique est en mesure de donner un ordre de suppression d'un certificat de propriété de clé publique. Seul le particulier peut mandater son ALE pour le faire.
   Selon la présente invention, un formulaire papier de révocation pré-affranchi, délivré lors de l'enrôlement du particulier peut également être un vecteur de révocation. Ce formulaire à poster comprend deux volets : un pour la centrale de l'Autorité d'Enregistrement, un pour l'ALE. Un seul quelconque sur les deux permet la suspension de la publication du certificat de propriété de clé publique sur le serveur Notaire Electronique (NE). La combinaison des deux permet de supprimer le « certificat de propriété de clé publique » sur le serveur NE après une ultime vérification auprès du particulier. La suite logique de la démarche est la génération d'une nouvelle bi-clé, d'un nouveau certificat de clé publique et du nouveau « certificat de propriété de clé publique » correspondant. L'usage du module automatique de publication de sa nouvelle clé publique (certificat de clé publique) auprès des fournisseurs d'identité et des annuaires facilite la vie du particulier lors de la phase de renouvellement.
8) Recouvrement. Selon le RGS de l'ANSSI, « Le recouvrement de clé est une opération qui peut avoir pour objectif d'assurer la disponibilité d'un service ou de répondre à des exigences légales. Ce type de fonctionnalité est d'autant plus difficile à mettre en oeuvre que ses objectifs sont par nature contraires aux objectifs de sécurité visés par ailleurs. La définition précise de la fonctionnalité vissée est indispensable de même qu'une expertise cryptographique globale. »

Le Cabinet « Baker & McKenzie » apporte son expertise sur le sujet du séquestre des clés. « La question du séquestre des clés est un vrai problème notamment dans le cadre de la lutte contre la cybercriminalité. Aujourd'hui, à notre connaissance, aucune société n'assure cette fonction de séquestre pour le compte de la justice. Cette obligation de séquestre semble résulter de l'article 434-15-2 du Code Pénal, selon lequel toutes les personnes amenées à connaître d'une convention secrète, c'est-à-dire le titulaire, l'émetteur, le ou les destinataires des messages chiffrés et les prestataires de services de cryptographie (et donc également les fournisseurs de clés de signature asymétriques), ont l'obligation de remettre et de mettre en oeuvre les conventions secrètes aux autorités judiciaires. Il y a un risque dans le cas où l'utilisateur est gardien des clés qu'il soit dans l'impossibilité de s'acquitter de ses obligations légales dans le cas où il a perdu ses clés ou les a détruit involontairement. »

Un autre usage de la présente invention permet de sécuriser le « Portefeuille De Cartes » (PoDeCa) d'un particulier en combinant les certificats de clé publique et de propriété de clé publique. Le processus est le suivant. 1) Le contenu du PoDeCa est en clair. 2) L'utilisateur légitime du PoDeCa souhaite chiffrer le contenu du PoDeCa et transmet son certificat de clé publique « utilisateur » au PoDeCa. 3) Le Sélecteur d'identité requête le serveur Notaire Electronique mentionné dans le certificat. 4) Le serveur Notaire Electronique prouve son identité au Sélecteur d'identité grâce à son certificat serveur délivré par une Autorité de Certification reconnue (certificat SSL/TLS, *Secure Socket Layer* / *Transport Layer Security*). 5) Le serveur Notaire Electronique envoie la réponse à la requête sur le certificat de propriété de l'utilisateur au Sélecteur d'identité. 6) En cas de réponse positive sur la validité de la clé publique et son appartenance, le contenu du PoDeCa est chiffré par le Sélecteur d'identité avec cette clé publique, verrouillant ainsi l'accès à son contenu à toute personne autre que le détenteur de la clé privée correspondante (c'est-à-dire l'utilisateur légitime). 7) Le propriétaire légitime du PoDeCa est seul en mesure de déchiffrer le contenu du PoDeCa avec sa clé privée.

Ce qui est important grâce aux étapes 3), 4), 5) et 6) c'est que personne hormis l'utilisateur légitime ne peut chiffrer le contenu du PoDeCa et ainsi empêcher l'usage légitime d'un PoDeCa ouvert à l'origine.

La CNIE (Carte Nationale d'Identité Electronique) ou « *e-ID Card »* existe déjà dans de nombreux pays et est en projet dans de nombreux autres. La cohabitation avec la présente invention est donc inévitable et doit être abordée. On peut considérer que la « *e-ID Card »* doit être employée essentiellement pour des démarches à enjeu important dont l'objet concerne le Régalien ou bien les Collectivités Territoriales. Le déploiement de "Terminaux Point Administratif' (TPA) dans les relais et les centres administratifs à l'instar des Terminaux Point de Vente (TPV) dans les commerces actuels est une voie à privilégier. Le reste des démarches administratives à enjeu plus faible se fait par Internet, sans utilisation obligatoire de la *e-ID Card.* Il est difficile en effet d'imaginer à court terme dans certains pays un déploiement massif de lecteurs de cartes à puce auprès d'une population très nombreuse. Ce projet a déjà été maintes fois envisagé par le passé dans d'autres contextes mais n'a jamais abouti.

Selon l'invention, les deux systèmes, *e-ID Card* et IGCP « 2.0 » doivent cohabiter de la façon suivante. L'*e-ID Card* est utilisée pour les démarches administratives physiques à enjeu dans les centres et relais administratifs tous équipés de TPA. L'*e-ID Card* est utilisée pour les démarches administratives en ligne lorsque l'utilisateur disposera d'un lecteur de carte à puce. L'*e-ID Card* est utilisée au choix de l'utilisateur pour d'autres services en ligne lorsque l'utilisateur disposera d'un lecteur de carte à puce. Le certificat de clé publique « utilisateur » pourra être utilisé au choix de l'utilisateur pour des services en ligne (tous supports physiques confondus). Le certificat de clé publique « utilisateur » pourra être utilisé au choix de l'utilisateur pour des démarches administratives en ligne avec faible enjeu autorisées par l'État (tous supports physiques confondus).

L'absence de déploiement à grande échelle des IGCP actuelles au niveau du particulier (citoyen/consommateur/professionnel) tient davantage à des problèmes d'organisation et de coût qu'à des problèmes liés à une technologie déjà éprouvée. L'IGCP à trois niveaux propose une architecture multi-niveaux et de nouveaux protocoles cryptographiques qui adressent le niveau des particuliers et définit une nouvelle organisation. Cette nouvelle organisation est à la fois plus réaliste sur un plan pratique et implique une réduction significative des coûts. La présente invention implique et responsabilise davantage le particulier que dans le cadre d'une IGCP traditionnelle. Toutefois, elle préserve le particulier de la complexité du modèle actuel ou le rôle des Autorités de Certification apparait nébuleux.

Le modèle économique de l'invention prévoit la gratuité du service de base ou, au maximum, un prix correspondant au coût de la délivrance du certificat de propriété de clé publique. Des options proposées par les Agences Locales d'Enregistrement (ALE) peuvent être payantes, parmi lesquelles : la fourniture de l'authentifieur physique (par exemple, clé USB, crypto-clé USB, carte à puce...), le délai de la publication du certificat de propriété de clé publique sur le serveur Notaire Electronique (par exemple, gratuit sous 48 heures, payant sous 4 heures), la remise d'un formulaire pré-affranchi de demande de révocation du certificat de propriété de clé publique, la publication automatique par l'ALE du certificat de clé publique du particulier sur les principaux annuaires de clé publique et fournisseurs d'identité (IDP et IP/STS) de son choix, etc. Le modèle économique de l'invention supprime le coût récurrent d'une redevance annuelle comme c'est le cas actuellement avec les certificats payants des Autorités de Certification privées. Le modèle économique de l'invention diminue le coût de l'IGCP pour le particulier (gratuit pour le service de base et peu onéreux avec les options) pour permettre son adoption à grande échelle.

D'autres inconvénients des IGCP traditionnelles sont connus, et notamment sur l'Autorité de Certification (AC) qui constitue la clé de voute de sa sécurité. En effet, la clé privée de l'AC qui signe les certificats de personne supporte à elle-seule tout le poids de la sécurité. Selon le RGS de l'ANSSI, « Dans beaucoup de systèmes cryptographiques, notamment ceux faisant intervenir des tiers de confiance, il existe une ou plusieurs clés dont la compromission ou l'atteinte à l'intégrité peut entraîner des atteintes aux objectifs de sécurité de tout ou d'une grande partie des acteurs du système. Il s'agit par exemple des clés maîtres d'un système de dérivation de clé, d'une clé de réseau ou de la clé privée d'une autorité de certification. Nous parlerons dans ce cas de clé présentant un risque d'impact systémique ou de façon plus concise de *clé à risque systémique.* [...] Cette règle vise à sensibiliser les concepteurs au risque qu'il y aurait à faire reposer l'ensemble d'un système cryptographique sur une clé à risque systémique sans prévoir le cas où les objectifs de sécurité sur cette clé seraient remis en cause. [...] Aucun dispositif purement technique n'est à même de protéger de façon satisfaisante une clé présentant un risque systémique. [...] L'expérience prouve qu'une étude systématique de l'impact de chaque clé apporte beaucoup pour l'amélioration de la robustesse du système, notamment en identifiant justement les clés présentant un impact systémique. »

La compromission de la clé privée d'une Autorité de Certification (AC) revient à rendre obsolète l'ensemble des certificats émis jusqu'à ce jour par cette AC. Assurer la sécurité de la clé privée de l'AC (dont la durée de vie est grande) pour la préserver d'un risque systémique est donc très coûteux. Ce coût est forcément répercuté sur le prix de la redevance annuelle des certificats de personnes.

Selon la présente invention, le poids de la sécurité est mieux réparti entre les acteurs. Il n'existe pas véritablement de clés à risque systémique. La sécurité du système n'en est que meilleure car l'enjeu collectif diminue, surtout lorsque de très nombreux particuliers sont concernés. Chaque particulier assume la responsabilité de la certification individuelle de sa clé publique. L'agent d'enregistrement, quant à lui, en garantit seulement le processus. L'Autorité d'Enregistrement ne supporte donc pas le poids des responsabilités d'une Autorité de Certification qui doit assumer l'ensemble des certificats de clé publique qu'elle a émis.

La présente invention introduit la notion de Notaire Electronique (NE). Le NE et l'Autorité de Certification (AC) sont tous deux des Tiers de Confiance (TC). Cela dit, une AC correspond à un type précis de tiers de confiance qui suit des règles spécifiques (clé privée de l'AC qui signe les certificats émis, CRL *Certificate revocation List,* protocole OCSP *On-line Certificate Status Protocol*) et a ses propres exigences de sécurité. Le NE ne rentre pas dans cette catégorie : il est un annuaire (ou une base de données) de « certificats de propriété de clé publique » de son espace de confiance. Ses exigences de sécurité concernent sa disponibilité (comme tout serveur critique), son intégrité et son authenticité qui peuvent être facilement assurées par la signature de son contenu, c'est-à-dire des enregistrements eux-mêmes et de l'annuaire global. Le NE ne détient pas la clé publique des personnes physiques et il n'a signé aucun certificat de clé publique. L'enjeu de la sécurité du NE est donc différent de celui d'une Autorité de Certification.

Le serveur Notaire Electronique possède : une bi-clé « interne » de son IGCP Interne pour ses échanges sécurisés avec ses propres Agences Locales d'Enregistrement ; une bi-clé "externe" dont la clé publique est certifiée par une Autorité de Certification « reconnue » vérifiable par tous (particulier avec son navigateur et Service sur Internet).

Selon la présente invention, la clé privée externe du Notaire Electronique est placée dans un HSM (*Hardware Security Module*) hors-ligne et signe chaque nouvel enregistrement publié ensuite sur le serveur (en ligne) du NE. Chaque enregistrement correspond à un « certificat de propriété de clé publique » de la base. Ainsi il est possible de vérifier l'intégrité et l'authenticité du contenu proposé par le NE grâce au certificat de la clé publique externe du NE signé par une Autorité de Certification « reconnue ».

Selon l'invention, un enregistrement de l'annuaire de « certificats de propriété de clé publique » du Notaire Electronique (NE) est composé des éléments suivants : le Numéro de série du certificat de propriété (ce numéro qui sert d'index ou d'identifiant à l'enregistrement est le même que celui du certificat de clé publique X.509v3 du particulier) ; une Version qui indique à quelle version de la norme correspond ce certificat ; un Algorithme de scellement (identifiant de l'algorithme qui a servi à sceller le « certificat de propriété de clé publique ») ; le Certificat de propriété de clé publique du particulier (scellé) ; la Signature du Notaire Electronique sur l'ensemble des champs précédents (et donc sur la totalité de l'enregistrement).

Selon l'invention, le protocole de vérification par une entité de la clé publique d'un particulier (nommé Alice) est le suivant : 1) Récupération du certificat de clé publique d'Alice (comment être sûr que cette clé publique K_{pub}X écrite dans le certificat de clé publique d'Alice est bien celle d'Alice ?). 2) Lecture du numéro (de série) du certificat. 3) Lecture de la clé publique K_{pub}X lisible dans le certificat. 4) Lecture de l'adresse du serveur du Notaire Electronique (NE) (dans par exemple X509v3 *CRL Distribution Points*) contenu dans le certificat de clé publique. 4Bis) Vérification du certificat de clé publique du serveur NE (signé par une AC reconnue). 5) Requête en temps réel sur le serveur du NE pour lire le « certificat de propriété de clé publique » d'Alice à la valeur d'index égale au numéro (de série) du certificat de clé publique. 6) Vérification de l'intégrité de l'enregistrement trouvé et authentification du Notaire Electronique qui l'a publié : vérification de la signature de l'enregistrement avec le certificat du Notaire Electronique présent dans le navigateur ou le serveur de l'Entité (en effet le Notaire Electronique signe chaque enregistrement de son annuaire avec sa clé privée dont la clé publique correspondante a été certifiée par une AC "reconnue"). 7) Si l'enregistrement est intègre et que le NE est bien authentifié, tentative d'ouverture du certificat de propriété s'il est opaque ou vérification de la signature du certificat de propriété s'il est lisible avec la clé publique K_{pub}X. 8) Si K_{pub}X = K_{pub}A (c'est-à-dire est la bonne) alors le certificat de propriété s'ouvre et devient lisible s'il était opaque sinon il reste illisible (pas de divulgation d'information) ou bien sa signature est vérifiée s'il était lisible : première vérification. 9) Calcul de l'empreinte de cette clé publique : H(K_{pub}X) = e_{pub}X. 10) Comme le certificat de propriété est lisible, comparaison de e_{pub}X calculée à l'étape 9) avec l'empreinte lue dans le certificat e_{pub}A. Si égalité alors la clé publique d'Alice est bien vérifiée : seconde vérification. 11) Vérification de la signature de l'ALE présente dans le certificat de clé publique reçu avec la clé publique de l'ALE détenue par le serveur NE : en cas de vérification réussie le certificat de clé publique reçu est bien authentique. A l'issue de ce protocole, l'Entité peut utiliser la clé publique d'Alice en toute confiance.

Selon l'invention, l'IGCP « 2.0 » à trois niveaux s'appuie sur deux IGCP hiérarchiques éprouvées (« reconnue » et « interne ») combinées à une nouvelle IGCP non hiérarchique dite « utilisateur » pour traiter le cas d'utilisateurs finaux en grand nombre (les particuliers), point faible des deux premières.

La présente invention règle le problème lié à la révocation des certificats des utilisateurs finaux (consultation et mise-à-jour de la liste des certificats révoqués) car les « certificats de propriété de clé publique » sont consultables en temps réel sur le serveur Notaire Electronique.

L'avantage initial de l'IGCP hiérarchique qui consiste à ne pas avoir besoin d'être en ligne pour vérifier un certificat émis par un tiers ne semble plus d'actualité compte tenu de la quasi-nécessité de télécharger fréquemment des listes de certificats révoqués CRL (*Certificate Revocation List*) et plus encore avec le protocole OCSP (*On-line Certificate Status Protocol*) de vérification en ligne de la validité des certificats. Le désavantage hypothétique de la nécessité de consulter en ligne les certificats de propriété dans l'IGCP non hiérarchique « utilisateur » selon l'invention n'en est donc plus vraiment un.

Selon la présente invention, les certificats de clé publique paramétrés pour l'IGCP non hiérarchique « utilisateur » sont toutefois conformes à la norme d'une IGCP hiérarchique X.509v3 afin de pouvoir être utilisés par les applications existantes.

Le certificat de clé publique associe à la clé publique des informations spécifiques à l'utilisateur auquel elle se rapporte. Ces informations s'ajoutent aux informations de base du type numéro de version, numéro de série, algorithme de signature, période de validité, etc. Les extensions introduites dans la norme X.509v3 permettent de spécifier un certain nombre d'informations en fonction de l'usage prévu d'un certificat. Version : (indique à quelle version de X.509 correspond ce certificat). Numéro de série : Numéro de série du certificat.

Selon l'invention, ce même numéro (de série) est repris comme index de l'enregistrement dans l'annuaire (ou la base de données) des «certificats de propriété due clé publiques » publiés par le Notaire Electronique. Algorithme de signature : Identifiant du type de signature utilisée. Selon l'invention, Emetteur : *Distinguished Name* (DN) de l'Autorité d'Enregistrement (et non de certification) qui a contrôlé la création de ce certificat (et non qui a émis ce certificat). Selon l'invention, Valide à partir de : La date de création du certificat (et non la date de début de validité de certificat). Selon l'invention, Valide jusqu'à : Il n'y a plus de date de fin de validité de certificat car c'est le certificat de propriété qui fait foi. Selon une forme d'application de l'invention, une durée de 10 ans peut être appliquée par défaut à compter de la date de création. Objet *: Distinguished Name* (DN) du détenteur de la clé publique (l'utilisateur c'est-à-dire le particulier citoyen/consommateur/professionnel). Clé publique : Informations sur la clé publique de ce certificat. Extensions X509v3 : Extensions génériques optionnelles, introduites avec la version 3 de X.509. Selon l'invention, Signature : Signature de l'utilisateur sur l'ensemble des champs précédents (et non la signature de l'Autorité de Certification).

Parmi les extensions utiles, on trouve les informations suivantes. X509v3 *Basic Constraint* : Indique s'il s'agit du certificat d'une Autorité de Certification ou non, c'est à dire permettant d'émettre des certificats. Selon l'invention, la valeur est fixée à CA:FALSE (ce certificat ne peut pas servir à générer d'autres certificats). *Netscape Cert Type* : SSL Client, S/MIME, Object Signing : ces extensions permettent au possesseur du certificat de s'authentifier auprès de serveurs SSL, de signer des courriels et de les déchiffrer (par exemple extensions pour Thunderbird® et Firefox®). X509v3 *Key Usage* : Donne une ou plusieurs fonctions de sécurité auxquelles la clé publique est destinée. Ce champ permet de spécifier plusieurs services de sécurité. *Digital SignaturelNon RepudiationlKey Encipherment* : ces extensions permettent de signer des messages, de s'assurer que le possesseur est bien l'auteur d'une action. Key Encipherment permet d'utiliser le chiffrement S/MIME. X509v3 *subjectAltName* : ce champ contient un ou plusieurs noms alternatifs pour le porteur de certificat, exprimé sous diverses formes possibles. Selon une forme d'application de l'invention, ce champ pourrait être l'adresse de courriel due commue par exemple : "particulier@monfournisseurdemessagerie.fr".

Selon l'invention, X509v3 *issuerAltName* : ce champ contient un ou plusieurs noms alternatifs pour l'Autorité d'Enregistrement qui a contrôlé la création de ce certificat, exprimé sous diverses formes possibles. X509v3 *CRL Distribution Points* : normalement ce champ contient l'adresse de la *Certificate Revocation List* (CRL) ou liste de révocation des certificats permettant de connaître le statut de ce certificat. Selon l'invention, ce champ contient l'adresse du serveur Notaire Electronique de l'Autorité d'Enregistrement qui a contrôlé la création de ce certificat. Par exemple :
"URI:http://notaireelectronique.notairesdefrance.fr",
"URI:http://notaireelectronique.monoperateurtelecom.fr",
"URI:http://notaireelectronique.mabanque.fr".

Selon la présente invention, la vie privée du particulier citoyen/consommateur/professionnel n'est pas confiée directement, soit à un seul Etat tout puissant (à l'exécutif), soit à quelques sociétés commerciales privées (les Autorités de Certification, parfois des sociétés étrangères) qui jouissent de quasi-monopoles. L'Etat est un garant pour assurer la confiance (via l'autorité judiciaire et les notaires) mais pas un acteur direct.

Dans le cas du cercle Régalien, le notaire rend compte à l'Etat, car il est assermenté en tant qu'officier ministériel (il dépend du ministère de la justice) ; mais il ne rend compte ni à l'exécutif (le gouvernement) ni au législatif (le parlement) : dans ces conditions l'Etat peut difficilement jouer les « *Big Brother* ». La personne, l'individu, est mis au centre de la nouvelle infrastructure car il fait établir son propre « certificat de propriété de clé publique » sans déléguer la certification à une Autorité de Certification. Le particulier citoyen/consommateur/professionnel dispose ensuite de plus de liberté dans la publication de ses certificats de clé publique.

L'administration française a établi pour ses besoins propres, et pour les organismes étant amenés à travailler dans le cadre de commandes publiques, une politique de référencement de sécurité PRIS (Politique de Référencement Intersectorielle de Sécurité) version 2.1 de novembre 2006. Cette politique s'applique en particulier à la dématérialisation des échanges électroniques. Les préconisations de la PRIS concernent l'usage d'architectures à clé publique (PKI). La PRIS définit 3 niveaux de sécurité qui vont de une étoile à trois étoiles. Le niveau 3*** impose : l'authentification forte, un enregistrement en face à face, une remise/acceptation d'un certificat en face à face si non fait lors de l'enregistrement, si l'Autorité de Certification ne génère pas la bi-clé, vérification que le certificat est bien associé à la clé privée correspondante (chargement à distance sur une carte à puce), acceptation explicite du certificat par le porteur. L'enregistrement et la délivrance des certificats de personne mis en oeuvre par l'IGCP « utilisateur » selon l'invention respectent les conditions du niveau 3***.

L'IGCP « utilisateur » selon l'invention préconise, pour chaque particulier citoyen/consommateur/professionnel, le stockage sur un support physique d'authentification et de signature de deux couples de bi-clé : le premier pour l'authentification (avec présomption de fiabilité), le second pour la signature électronique afin de valider une transaction en marquant son consentement. Les deux clés privées devront être stockées de façon sécurisée : soit en étant chiffrées et stockées dans une mémoire à accès libre, soit en étant stockées en clair dans une mémoire sécurisée avec contrôle d'accès, soit en étant stockées chiffrées dans une mémoire sécurisée avec contrôle d'accès (la solution la plus sûre).

Selon la présente invention, les certificats de clé publique X.509v3 auto-signés sont stockés en clair. Le premier est un certificat d'authentification. Le second est un certificat de (vérification) de signature dont la valeur juridique découle de la Directive Européenne 1999/93.

Selon l'invention, l'agent d'enregistrement assure un service de proximité délégué par l'Autorité d'Enregistrement. Cet agent d'enregistrement est le garant du processus d'enregistrement et de délivrance des certificats mais il n'en détient pas pour autant toutes les clés. Il ne détient pas la clé privée des particuliers ce qui est la moindre des choses, mais pas non plus leurs clés publiques dont il ne stocke que l'empreinte dans le « certificat de propriété de clé publique » qu'il publie sur le serveur Notaire Electronique de son Autorité.

Selon l'invention, c'est un notaire qui fait office d'Agent/Autorité d'Enregistrement pour le cercle Régalien. Le notariat français dispose déjà d'une IGCP « interne » qui donne à chaque notaire le pouvoir de signer numériquement des actes authentiques. Le notariat est organisé au niveau international et il n'est pas spécifique à la France. Cette nouvelle organisation a donc vocation à devenir mondiale.

Selon un mode d'application de l'invention, les navigateurs Web, les sélecteurs d'identité et les logiciels de messagerie contiennent « en dur » les adresses des quelques dizaines de serveurs Notaire Electronique par pays avec leurs propres certificats (pour la vérification de l'intégrité de leur base) en plus des certificats des principales Autorités de Certification actuelles.

Selon un mode d'application de l'invention, la gratuité doit rester la règle pour le particulier. Les banques comme les opérateurs de télécommunication peuvent assumer le coût de l'opération d'enrôlement des consommateurs à l'IGCP « utilisateur » par leurs agences d'enregistrement respectives en la combinant avec une action commerciale et/ou de fidélisation liées au déplacement physique des particuliers. Les bénéfices attendus de la confiance ainsi instaurée dans les nombreuses transactions électroniques qui impliquent la banque ou l'opérateur de télécommunication compensent largement le temps et le coût de l'enrôlement. Par ailleurs, il existe de nombreuses options payantes qui apportent de la valeur ajoutée au particulier et qui permettent aux agences de se rémunérer.

Selon un mode d'application de l'invention, les mairies ont pour mission l'enrôlement des citoyens à l'IGCP « utilisateur » pour le cercle Collectivités Territoriales. Cette mission, à l'instar de la délivrance de la Carte Nationale d'Identité Electronique (CNIE) ou e-ID Card, est compatible avec les nombreux services déjà proposés aux administrés.

Selon un mode d'application de l'invention, le gouvernement impose aux Notaires de France la quasi-gratuité du service de délivrance des certificats « utilisateur » (de clé publique et de propriété) aux citoyens en permettant aux notaires de mieux faire connaitre leur activité pendant cette opération. En effet, les notaires ont habituellement peu d'occasions (achat d'un bien, contrat de mariage, succession) de faire venir leurs clients dans leurs études. Un prix psychologique équivalent à celui d'une consultation médicale chez un généraliste pour l'enregistrement du particulier, payable une seule fois à l'acte est un maximum à ne pas dépasser.

Selon un mode d'application de l'invention, la gratuité étant l'objectif à atteindre pour le service de base, des services optionnels pourraient être payant : fourniture de l'authentifieur physique (carte à puce, lecteur ou crypto-clé USB), délai raccourci de publication du « certificat de propriété de clé publique » du particulier sur le serveur Notaire Electronique, publication automatique du certificat de clé publique du particulier sur les principaux annuaires et autres fournisseurs d'identité, etc..

Des informations personnelles se trouvent dans le certificat de clé publique : nom, prénom, date et lieu de naissance. Ces informations sont jugées comme confidentielles : même l'identifiant persistant entre chaque couple (fournisseur d'identité, fournisseur de service) est unique et opaque afin de ne pas dévoiler d'information confidentielles sur un utilisateur à son insu. Le fait de transmettre ces informations pour s'authentifier peut ainsi être une entrave au besoin d'en connaître. Comment peut-on contourner cette contrainte ? Comment ne pas inclure d'informations confidentielles sur l'utilisateur dans les certificats de clé publique ? Quelles informations y faire figurer dans ce cas ?

Selon un mode particulier d'application de l'invention, l'identité en clair de l'utilisateur est remplacée dans le certificat de clé publique par un identifiant ou plus précisément une empreinte identitaire. Cette empreinte identitaire est par exemple : eid = H (nom + prénom(s) + date de naissance + lieu de naissance), avec H une fonction cryptographique de hachage à sens unique, ce qui correspond à une empreinte identitaire. La chaine à hacher à sens unique est suffisamment longue pour éviter une attaque par dictionnaire. Lorsqu'un interlocuteur connait suffisamment bien la personne (ou bien en lisant sa CNI), il est possible de vérifier au cas par cas que c'est bien lui. Par exemple, si je connais bien le particulier Alice, je connais aussi ses date et lieu de naissance et je calcule : H (NomAlice + Alice + 01/01/1962 + Saint-Etienne) pour vérifier que l'empreinte identitaire "eid" stockée dans le certificat de clé publique lui correspond bien.

L'IGCP « utilisateur » est centrée sur l'utilisateur final à qui elle apporte confiance et sécurité. Doter les utilisateurs finaux, c'est-à-dire les particuliers citoyens/consommateurs/professionnels, de moyens cryptographiques de sécurité est un réel besoin. Ce besoin n'est pas satisfait à l'heure actuelle par les solutions que sont les IGCP « reconnues » (ou « internationales ») et « internes » qui n'atteignent pas le particulier citoyen/consommateur/professionnel selon un ratio (sécurité + responsabilité + contrainte) / coût raisonnable.

L'IGCP « utilisateur » est plus économique car, à sécurité et périmètre de confiance équivalents, le coût d'un certificat utilisateur délivré et géré par une Autorité de Certification « reconnue » ou reconnue est beaucoup plus élevé. Dans la présente invention, la gestion des serveurs Notaire Electronique des Autorités d'Enregistrement ainsi que leur sécurité sur les plans de la disponibilité et de l'intégrité ne présentent pas de surcoût significatif comme c'est le cas pour les infrastructures des Autorités de Certification, soumises à des risques systémiques.

Selon un extrait du Guide de la signature électronique édité en octobre 2008 par la FNTC (Fédération Nationale des Tiers de Confiance) : « La signature électronique a la même valeur que la signature manuscrite dès lors qu'elle permet l'identification de celui qui l'appose ainsi que la manifestation du consentement des parties aux obligations qui découlent de cet acte (article 1316-4 du Code civil). Il est important de noter qu'en cas de litige, c'est le juge qui appréciera souverainement le caractère probant de la signature et par là sa valeur juridique, et ce que la signature soit manuscrite ou électronique (articles 285 et suivants du Code de procédure civile). Rappelons que, d'un point de vue strictement juridique, peu importe que les signatures électroniques soient « simples », « sécurisées », ou qu'elles utilisent des « certificats qualifiés » : elles ont toutes la même valeur juridique. On met souvent en avant la « présomption de fiabilité », attachée aux signatures électroniques sécurisées réalisées selon le dispositif spécifié à l'article 1316-4, al. 2 du Code civil et à l'article 2 du décret du 30 mars 2001. Il faut toutefois rappeler à ce sujet deux éléments : L'apport juridique de la signature « emportant présomption de fiabilité » est faible dans le cadre de relations B to B (*Business to Business*) ou B to C (*Business to Consumer*) ; les exigences relatives à la signature sécurisée sont contraignantes à mettre en oeuvre, et ne concerneront dans la pratique qu'une population très réduite, principalement les professions réglementées pour la perfection des actes authentiques. [...] Depuis la réforme du code civil, la signature électronique a la même valeur qu'une signature manuscrite. Pour bénéficier de la présomption de fiabilité, il faut que la signature électronique soit créée en conformité avec le décret du 30 mars 2001. Notamment, il faut que le système de signature électronique repose sur un dispositif sécurisé de création de signature électronique. Ce dispositif est évalué par un centre d'évaluation agréé par l'ANSSI avant d'être certifié conforme par l'ANSSI (article 3.II du décret du 30 mars 2001). La vérification de la signature électronique repose sur l'utilisation d'un certificat électronique qualifié (c'est-à-dire délivré par un prestataire de certification électronique qui s'engage à respecter un certain nombre de conditions - article 6 du décret - ou qui a été accrédité par le COFRAC - article 7 du décret). »

Dans la présente invention, il existe bien un « certificat de propriété de clé publique », mais qui ne s'appuie pas sur une Autorité de Certification reconnue. La signature électronique créée par le mécanisme d'une IGCP « utilisateur » est donc parfaitement valide.

Il existe toutefois des limitations à la signature électronique créée dans le cadre d'une IGCP « utilisateur » car elle ne repose pas sur un dispositif sécurisé de création ni sur un certificat qualifié au sens du code civil. Par conséquent, la signature électronique créée ne bénéficie pas de la présomption de fiabilité en termes de preuve. En conséquence, il incombe aux utilisateurs de la signature électronique de prouver que le lien entre la signature électronique et l'acte auquel elle se rattache est fiable (article 1316-4 du code civil).

En cas d'usurpation de signature, la responsabilité est limitée car la signature électronique créée par une IGCP « utilisateur » n'est pas qualifiée et n'a pas de présomption de fiabilité. En particulier, cette signature électronique n'utilise pas de certificats qualifiés et les Autorités d'Enregistrement ne s'engagent pas à respecter les conditions de l'article 6.II du décret du 30 mars 2001. Ce sera à l'utilisateur de prouver que c'est bien lui qui a signé. De même pour le fournisseur de service.

Dans la présente invention, la signature créée par l'IGCP « utilisateur » fonctionne dans un cadre contractuel. L'Autorité d'Enregistrement (AE) définit contractuellement le périmètre des responsabilités par l'ajout d'un contrat spécifique entre l'AE (banque ou opérateur de télécommunication = il y a déjà un contrat) et l'utilisateur final qui précise les responsabilités de l'AE et indique notamment que la signature électronique ne bénéficiant pas d'une présomption de fiabilité au sens de l'article 1316-4 du code civil, il conviendra de sécuriser sa force probante par contrat. Ainsi, la valeur probante de l'acte sur lequel est apposée la signature électronique créée dans le cadre d'une IGCP « utilisateur », doit être contractuellement reconnue par les parties au contrat.

A cet égard, il convient de distinguer différents cas de figure. En ce qui concerne les contrats conclus entre commerçants, la preuve est libre et une telle convention de preuve ne soulève pas de problème. En ce qui concerne les contrats conclus entre un commerçant et un consommateur, il convient de distinguer selon la valeur du contrat. Pour les contrats d'une valeur inférieure à 1 500 €, la preuve est libre et il est possible de prévoir dans le contrat avec l'utilisateur une convention de preuve. En revanche, le Code civil exige que les contrats d'une valeur supérieure à 1 500 € soient passés par écrit (article 1341 du Code civil et décret n° 80-533 du 15 juillet 1980 modifié par décret n° 2001-476 du 30 mai 2001 et décret n° 2004-836 du 20 août 2004). Selon l'article 1316-1 du Code civil, l'écrit sous forme électronique a la même valeur que l'écrit papier « sous réserve que puisse être dûment identifiée la personne dont il émane et qu'il soit établi et conservé dans des conditions de nature à en garantir l'intégrité » (article 1316-1 du Code civil).

Ces conditions ne sont pas remplies de facto par la signature électronique délivrée dans le cadre d'une ICGP « utilisateur », ce qui implique que les actes juridiques sur lesquels est apposée cette signature électronique ne sont pas considérés comme des écrits. Cependant, il semble que l'exigence d'un écrit de l'article 1341 du Code civil puisse être exclue dans le cadre d'une convention de preuve. La Cour de cassation a ainsi reconnu la validité d'une telle convention à propos de l'utilisation du code de la carte bancaire (Cour de cassation, Civ. 1^{ère}, 8 novembre 1989). Néanmoins, la validité d'une telle convention de preuve peut être remise en cause sur le terrain du droit de la consommation : en effet, les clauses qui renversent la charge de la preuve au détriment du consommateur ou limiteraient ses moyens de preuve sont généralement considérées comme abusives, lorsqu'une partie s'en remet purement et simplement à un système probatoire qui serait entièrement sous le contrôle de l'autre partie, serait valable. A noter qu'outre ces règles de preuve, il convient également de respecter des règles de validité des contrats conclus de manière électronique avec les consommateurs qui restent soumis à l'exigence du « double click » de l'article 1369-1 du Code civil qui est d'ordre public et ne peut être exclue par une convention de preuve (sauf entre professionnels). En l'absence d'un tel mécanisme, ces contrats ne sont pas valables.

En termes d'usages, la solution d'une IGCP non hiérarchique « utilisateur » est bien adaptée au contexte du *B to B* des petites entreprises. Pour le *B to* C, cela pourrait constituer une solution intermédiaire entre une présomption simple (des milliers de contrats sont signés tous les jours sous ce régime) et l'utilisation d'un certificat qualifié.

Selon l'IGCP « 2.0 », le particulier est responsable de ses clés (privée et publique) ainsi que de ses certificats de clé publique.

Selon l'IGCP « 2.0 », l'Autorité d'Enregistrement (AE) est responsable des « certificats de propriété de clé publique » qu'elle a émis (sans toutefois les signer et les certifier) et qu'elle publie sur son serveur Notaire Electronique. L'AE garantit l'enregistrement, la délivrance et l'authenticité du « certificat de propriété de clé publique ». Elle ne stocke aucune clé du particulier.

Selon l'IGCP « 2.0 », aucun organisme central n'endosse la responsabilité du certificat de clé publique de millions de particuliers citoyens/consommateurs/professionnels. Le pouvoir exécutif n'est pas non plus soupçonné d'être le maître du jeu (cf. les problèmes posés par le fichier "Edvige").

Dans le cas d'une IGCP hiérarchique « interne » déployée à grande échelle, se pose le problème de la responsabilité de l'Autorité de Certification, de sa légitimité et du respect de la vie privée. Si cette IGCP est de nature étatique : sa responsabilité est normale mais budgétée (à un coût), sa légitimité est normale, son Respect de la vie privée ne convient pas. Si cette IGCP est de nature privée : sa responsabilité est normale mais facturée, sa légitimité est normale et son respect de la vie privée ne convient pas. Si cette IGCP est de nature "organisme dédié" : sa responsabilité est normale, sa légitimité est difficile à acquérir, son respect de la vie privée ne convient pas. Aucune de ces IGCP n'est pleinement satisfaisante.

La vie privée du particulier citoyen/consommateur/professionnel ne doit pas être confiée directement à un seul État tout puissant (à l'exécutif). L'Etat doit un être un garant pour assurer la confiance (via l'autorité judiciaire) mais pas un acteur direct.

La vie privée du citoyen/consommateur/professionnel ne doit pas être confiée directement à une grande société commerciale privée qui jouirait d'un quasi-monopole. En cas de multiplicité des Autorités de Certification (AC) privées, on retrouverait l'imbroglio de l'architecture pyramidale des AC pour adresser des utilisateurs d'horizons très divers.

L'IGCP « 2.0 » à trois niveaux conserve les avantages indéniables des IGCP « reconnue » et « interne » pour leurs usages respectifs. L'IGCP « reconnue » adresse peu d'acteurs : IDPs/IPs, APs, SPs/RPs, Notaires Electroniques... Les IGCP « internes » adressent un nombre d'acteurs significatifs (quelques milliers) à savoir les agences de proximité des Autorités d'Enregistrement : les Agences Locales d'Enregistrement.

Dans la présente invention, l'IGCP non hiérarchique « utilisateur » qui adresse la masse des particuliers citoyens/consommateurs/ professionnels s'affranchit des Autorités de Certification et donc de leur faiblesse avérée dans le traitement d'un très grand nombre d'utilisateurs d'horizons divers. L'IGCP « utilisateur » s'appuie au contraire sur des Autorités d'Enregistrement disposant d'un réseau existant d'agences de proximité et d'un serveur Notaire Electronique, qui elles, y sont parfaitement adaptées. Dans la présente invention, l'IGCP « utilisateur » donne au particulier le contrôle de son identité numérique en tant qu'acteur central, incontournable et responsable.

## Revendications

1. Infrastructure non hiérarchique de gestion de bi-clés de sécurité de personnes physiques ou d'éléments tels que des animaux, des plantes, des machines et des objets, comportant une clé publique et une clé privée avec un certificat de clé publique dont le numéro est unique, ladite structure ne comportant pas d'autorité de certification distincte des personnes physiques ou des éléments, ladite structure comportant au moins une autorité d'enregistrement et son serveur notaire électronique, **caractérisée en ce que** l'on prévoit au moins une autorité d'enregistrement et son serveur notaire électronique pour un cercle de confiance, tel que par exemple le cercle régalien, le cercle collectivités territoriales, le cercle banque, finance et assurance, le cercle internet et télécommunication, le cercle santé, un cercle privé correspondant par exemple à une entreprise, à une organisation ou à un groupement de personnes ou d'éléments, ladite autorité d'enregistrement comprenant des agences locales d'enregistrement de proximité telles que par exemple, respectivement, notaires et huissiers, mairies et bureaux de poste, agences de banques et d'assurance, agences et boutiques de télécommunications, caisses d'assurance maladie et pharmacies, agences d'entreprise ou d'organisation ou de groupement de personnes ou d'éléments, et aussi éventuellement des agences locales itinérantes, **en ce qu'**une agence locale d'enregistrement établit pour chaque personne physique ou élément, après vérification en face à face de son identité ou de son identification, un certificat de clé publique dont le numéro est unique contenant notamment l'adresse, par exemple URL, du serveur notaire électronique de l'autorité d'enregistrement dont l'agence locale a enregistré la personne physique ou l'élément, et un certificat de propriété de clé publique, avec le même numéro que le certificat de clé publique, qui contient l'identité de la personne physique ou l'identification de l'élément et une représentation de sa clé publique, ledit certificat de propriété de clé publique étant auto-scellé, c'est-à-dire qu'il est, soit signé avec la clé privée de la personne physique ou de l'élément, soit chiffré avec la clé privée de la personne physique ou de l'élément, selon un usage atypique de cette clé, afin de le rendre opaque à l'exception de son numéro, et **en ce que** ce certificat de propriété de clé publique signé ou chiffré est transmis de façon sécurisée au serveur notaire électronique associé qui le stocke.

2. Structure selon la revendication 1, **caractérisée en ce que** la représentation de la clé publique de la personne physique ou de l'élément est une empreinte de cette clé publique.

3. Structure selon la revendication 1, **caractérisée en ce que** le certificat de propriété de clé publique de la personne physique ou de l'élément est également signé par l'agence locale d'enregistrement et contient cette signature.

4. Structure selon la revendication 1, **caractérisée en ce que** les certificats de propriété de clé publique sont conservés sur le serveur notaire électronique de l'autorité d'enregistrement.

5. Structure selon la revendication 1, **caractérisée en ce qu'**elle comporte un module de requête qui prend en entrée le certificat de clé publique de la personne physique ou de l'élément, interroge le serveur notaire électronique dont l'adresse figure dans ledit certificat de clé publique, en communiquant le numéro de ce certificat de clé publique et ledit certificat de clé publique, et qui reçoit en retour de la part du serveur notaire électronique dont l'adresse figure dans ledit certificat de clé publique : une assertion sur l'authenticité ou la non-authenticité de la prétendue clé publique de la personne physique ou de l'élément, et éventuellement une assertion sur l'authenticité ou la non-authenticité du certificat de clé publique de la personne physique ou de l'élément.

6. Structure selon la revendication 5, **caractérisée en ce que** le module de requête qui prend en entrée le certificat de clé publique de la personne physique ou de l'élément, vérifie l'authenticité de la clé publique du serveur notaire électronique dont l'adresse et le certificat de clé publique figurent dans ledit certificat de clé publique de la personne physique ou de élément.

7. Structure selon la revendication 5, **caractérisée en ce que** le module de requête est placé par exemple dans les navigateurs internet, les logiciels de messagerie électronique, les serveurs fournisseurs d'identité comme par exemple les IDP et les IP/STS, les applications informatiques, les processus informatiques.

8. Structure selon la revendication 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu et qui délivre une assertion du type « la clé publique n'est pas authentique » si le résultat de la recherche est négatif.

9. Structure selon la revendication 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que** si le résultat de la recherche est positif, ledit module de réponse fait une vérification de la signature du certificat de propriété de clé publique trouvé s'il est lisible, avec la clé publique reçue, et délivre une assertion du type « la clé publique n'est pas authentique » si la vérification échoue ou une assertion du type « la clé publique est authentique» si la vérification réussit.

10. Structure selon la revendication 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que**, si le résultat de la recherche est positif, ce module de réponse fait une tentative de déchiffrement du certificat de propriété de clé publique trouvé s'il est opaque, avec la clé publique reçue et selon un usage atypique de cette clé, et délivre une assertion du type « la clé publique n'est pas authentique » si le déchiffrement échoue ou une assertion du type « la clé publique est authentique» si le déchiffrement réussit.

11. Structure selon la revendication 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que** si le résultat de la recherche est positif, ledit module de réponse fait une vérification de la signature du certificat de propriété de clé publique trouvé s'il est lisible, avec la clé publique reçue, **en ce que** si la vérification est positive, ledit module de réponse calcule l'empreinte de la clé publique reçue, puis la compare avec l'empreinte de la clé publique stockée dans le certificat de propriété de clé publique et **en ce que** ledit module de réponse délivre une assertion du type « la clé publique n'est pas authentique », si les deux empreintes sont différentes ou une assertion du type « la clé publique est authentique », si les deux empreintes sont identiques.

12. Structure selon la revendication 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que** si le résultat de la recherche est positif, ledit module de réponse fait une tentative de déchiffrement du certificat de propriété de clé publique trouvé s'il est opaque, avec la clé publique reçue, **en ce que** si le déchiffrement réussit, ledit module de réponse calcule l'empreinte de la clé publique reçue, puis la compare avec l'empreinte de la clé publique stockée dans le certificat de propriété de clé publique préalablement déchiffré et **en ce que** ledit module de réponse délivre une assertion du type « la clé publique n'est pas authentique », si les deux empreintes sont différentes ou une assertion du type « la clé publique est authentique », si les deux empreintes sont identiques.

13. Structure selon les revendications 3 et 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que** si le résultat de la recherche est positif, ledit module de réponse fait une vérification de la signature du certificat de propriété de clé publique trouvé s'il est lisible, avec la clé publique reçue, **en ce que** si la vérification est positive, ledit module de réponse vérifie la signature de l'agence locale d'enregistrement avec la clé publique de cette même agence à laquelle le module a accès et **en ce que** ledit module de réponse délivre une assertion du type « le certificat de clé publique présenté n'est pas authentique » si la vérification échoue ou une assertion du type « le certificat de clé publique présenté est authentique » si la vérification réussit.

14. Structure selon les revendications 3 et 5, **caractérisée en ce qu'**elle comporte un module de réponse qui est installé sur tous les serveurs notaire électronique, qui reçoit en entrée la requête du module de requête, qui recherche dans la base de données dudit serveur notaire électronique s'il existe un numéro de certificat de propriété de clé publique identique au numéro de certificat de clé publique reçu, **en ce que** si le résultat de la recherche est positif, ledit module de réponse fait une tentative de déchiffrement du certificat de propriété de clé publique trouvé s'il est opaque, avec la clé publique reçue, **en ce que** si le déchiffrement réussit, ledit module de réponse vérifie la signature de l'agence locale d'enregistrement avec la clé publique de cette même agence à laquelle le module a accès et **en ce que** ledit module de réponse délivre une assertion du type « le certificat de clé publique présenté n'est pas authentique », si la vérification-échoue ou une assertion du type « le certificat de clé publique présenté est authentique », si la vérification réussit.

15. Structure selon la revendication 5, **caractérisée en ce que** la ou les assertions sont signées avec la clé privée du serveur notaire électronique et **en ce que** le module requêteur, vérifie la signature de la ou les assertions en utilisant la clé publique du serveur notaire électronique.

## Patentansprüche

1. Nicht-hierarchische Infrastruktur zur Verwaltung von Sicherheits-Schlüsselpaaren von natürlichen Personen oder Elementen wie Tieren, Pflanzen, Maschinen und Gegenständen, die einen öffentlichen Schlüssel und einen privaten Schlüssel mit einem öffentlichen Schlüsselzertifikat aufweist, dessen Nummer einzigartig ist, wobei die Struktur keine gesonderte Zertifizierungsstelle der natürlichen Personen oder der Elemente aufweist, wobei die Struktur mindestens eine Registrierungsstelle und ihren elektronischen Notarserver aufweist, **dadurch gekennzeichnet, dass** mindestens eine Registrierungsstelle und ihr elektronischer Notarserver für einen Vertrauenskreis vorgesehen werden, wie zum Beispiel der Hoheitskreis, der Kreis Gebietskörperschaften, der Kreis Bank, Finanzen und Versicherung, der Kreis Internet und Telekommunikation, der Kreis Gesundheit, ein privater Kreis entsprechend zum Beispiel einem Unternehmen, einer Organisation oder einer Gruppierung von Personen oder Elementen, wobei die Registrierungsstelle lokale Nahbereich-Registrierungsagenturen wie zum Beispiel jeweils Notare und Gerichtsvollzieher, Rathäuser und Postämter, Bank- und Versicherungsagenturen, Telekommunikationsagenturen und -shops, Krankenversicherungen und Apotheken, Unternehmens- oder Organisationsagenturen oder Gruppierungsagenturen von Personen oder Elementen, und auch ggf. lokale Wanderagenturen, dass eine lokale Registrierungsagentur für jede natürliche Person oder Element nach Verifizierung von Angesicht zu Angesicht ihrer/seiner Identität oder ihrer/seiner Identifizierung ein öffentliches Schlüsselzertifikat, dessen Nummer einzigartig ist, das insbesondere die Adresse, zum Beispiel URL, des elektronischen Notarservers der Registrierungsstelle enthält, deren lokale Agentur die natürliche Person oder das Element registriert hat, und ein öffentliches Schlüsseleigentumszertifikat mit der gleichen Nummer wie das öffentliche Schlüsselzertifikat erstellt, das die Identität der natürlichen Person oder die Identifizierung des Elements und eine Darstellung ihres/seines öffentlichen Schlüssels enthält, wobei das öffentliche Schlüsseleigentumszertifikat selbstversiegelt ist, d.h., dass es entweder mit dem privaten Schlüssel der natürlichen Person oder des Elements signiert oder mit dem privaten Schlüssel der natürlichen Person oder des Elements verschlüsselt ist, gemäß einer untypischen Verwendung dieses Schlüssels, um ihn mit Ausnahme seiner Nummer undurchsichtig zu machen, und dass dieses signierte oder verschlüsselte öffentliche Schlüsseleigentumszertifikat gesichert an den zugeordneten elektronischen Notarserver übertragen wird, der es speichert.

2. Struktur nach Anspruch 1, **dadurch gekennzeichnet, dass** die Darstellung des öffentlichen Schlüssels der natürlichen Person oder des Elements ein Abdruck dieses öffentlichen Schlüssels ist.

3. Struktur nach Anspruch 1, **dadurch gekennzeichnet, dass** das öffentliche Schlüsseleigentumszertifikat der natürlichen Person oder des Elements ebenfalls von der lokalen Registrierungsagentur signiert wird und diese Signatur enthält.

4. Struktur nach Anspruch 1, **dadurch gekennzeichnet, dass** die öffentlichen Schlüsseleigentumszertifikate auf dem elektronischen Notarserver der Registrierungsstelle aufbewahrt werden.

5. Struktur nach Anspruch 1, **dadurch gekennzeichnet, dass** sie ein Anforderungsmodul aufweist, das am Eingang das öffentliche Schlüsselzertifikat der natürlichen Person oder des Elements nimmt, den elektronischen Notarserver befragt, dessen Adresse im öffentlichen Schlüsselzertifikat erscheint, indem es die Nummer dieses öffentlichen Schlüsselzertifikats und das öffentliche Schlüsselzertifikat mitteilt, und das im Gegenzug vom elektronischen Notarserver, dessen Adresse im öffentlichen Schlüsselzertifikat erscheint, empfängt: eine Aussage über die Authentizität oder die Nicht-Authentizität des vorgeblichen öffentlichen Schlüssels der natürlichen Person oder des Elements, und ggf. eine Aussage über die Authentizität oder die Nicht-Authentizität des öffentlichen Schlüsselzertifikats der natürlichen Person oder des Elements.

6. Struktur nach Anspruch 5, **dadurch gekennzeichnet, dass** das Anforderungsmodul, das am Eingang das öffentliche Schlüsselzertifikat der natürlichen Person oder des Elements nimmt, die Authentizität des öffentlichen Schlüssels des elektronischen Notarservers verifiziert, dessen Adresse und das öffentliche Schlüsselzertifikat im öffentlichen Schlüsselzertifikat der natürlichen Person oder des Elements erscheinen.

7. Struktur nach Anspruch 5, **dadurch gekennzeichnet, dass** das Anforderungsmodul zum Beispiel in den Internet-Browsern, der Software von Mailboxen, den Identity-Provider-Servern, wie zum Beispiel den IDP und den IP/STS, den EDV-Anwendungen, den EDV-Prozessen angeordnet ist.

8. Struktur nach Anspruch 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers sucht, ob eine öffentliche Schlüsseleigentumszertifikatsnummer identisch der empfangenen öffentlichen Schlüsselzertifikatsnummer existiert, und das eine Aussage von der Art « der öffentliche Schlüssel ist nicht authentisch » liefert, wenn das Ergebnis der Suche negativ ist.

9. Struktur nach Anspruch 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers sucht, ob eine öffentliche Schlüsseleigentumszertifikatsnummer identisch der empfangenen öffentlichen Schlüsselzertifikatsnummer existiert, dass, wenn das Ergebnis der Suche positiv ist, das Antwortmodul eine Verifizierung der Signatur des gefundenen öffentlichen Schlüsseleigentumszertifikats, wenn es lesbar ist, mit dem empfangenen öffentlichen Schlüssel durchführt, und eine Aussage von der Art « der öffentliche Schlüssel ist nicht authentisch », wenn die Verifizierung missglückt, oder eine Aussage von der Art « der öffentliche Schlüssel ist authentisch » liefert, wenn die Verifizierung glückt.

10. Struktur nach Anspruch 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers sucht, ob eine öffentliche Schlüsseleigentumszertifikatsnummer identisch der empfangenen öffentlichen Schlüsselzertifikatsnummer existiert, dass, wenn das Ergebnis der Suche positiv ist, dieses Antwortmodul einen Versuch der Entschlüsselung des gefundenen öffentlichen Schlüsseleigentumszertifikats, wenn es undurchsichtig ist, mit dem empfangenen öffentlichen Schlüssel und gemäß einer untypischen Verwendung dieses Schlüssels durchführt, und eine Aussage der Art « der öffentliche Schlüssel ist nicht authentisch », wenn die Entschlüsselung missglückt, oder eine Aussage der Art « der öffentliche Schlüssel ist authentisch » liefert, wenn die Entschlüsselung glückt.

11. Struktur nach Anspruch 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers sucht, ob eine öffentliche Schlüsseleigentumszertifikatsnummer identisch der empfangenen öffentlichen Schlüsselzertifikatsnummer existiert, dass, wenn das Ergebnis der Suche positiv ist, das Antwortmodul eine Verifizierung der Signatur des gefundenen öffentlichen Schlüsseleigentumszertifikats, wenn es lesbar ist, mit dem empfangenen öffentlichen Schlüssel durchführt, dass, wenn die Verifizierung positiv ist, das Antwortmodul den Abdruck des empfangenen öffentlichen Schlüssels berechnet, ihn dann mit dem Abdruck des im öffentlichen Schlüsseleigentumszertifikat gespeicherten öffentlichen Schlüssels vergleicht, und dass das Antwortmodul eine Aussage der Art « der öffentliche Schlüssel ist nicht authentisch », wenn die zwei Abdrücke unterschiedlich sind, oder eine Aussage der Art « der öffentliche Schlüssel ist authentisch » liefert, wenn die zwei Abdrücke identisch sind.

12. Struktur nach Anspruch 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers sucht, ob eine öffentliche Schlüsseleigentumszertifikatsnummer identisch der empfangenen öffentlichen Schlüsselzertifikatsnummer existiert, dass, wenn das Ergebnis der Suche positiv ist, dieses Antwortmodul einen Versuch der Entschlüsselung des gefundenen öffentlichen Schlüsseleigentumszertifikats, wenn es undurchsichtig ist, mit dem empfangenen öffentlichen Schlüssel durchführt, dass, wenn die Entschlüsselung glückt, das Antwortmodul den Abdruck des empfangenen öffentlichen Schlüssels berechnet, ihn dann mit dem Abdruck des im vorab entschlüsselten öffentlichen Schlüsseleigentumszertifikat gespeicherten öffentlichen Schlüssels vergleicht, und dass das Antwortmodul eine Aussage der Art « der öffentliche Schlüssel ist nicht authentisch », wenn die zwei Abdrücke unterschiedlich sind, oder eine Aussage von der Art « der öffentliche Schlüssel ist authentisch » liefert, wenn die zwei Abdrücke identisch sind.

13. Struktur nach den Ansprüchen 3 und 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers, eine öffentliche Schlüsseleigentumszertifikatsnummer, wenn sie existiert, identisch der empfangenen öffentlichen Schlüsselzertifikatsnummer sucht, dass, wenn das Ergebnis der Suche positiv ist, das Antwortmodul eine Verifizierung der Signatur des gefundenen öffentlichen Schlüsseleigentumszertifikats, wenn es lesbar ist, mit dem empfangenen öffentlichen Schlüssel durchführt, dass, wenn die Verifizierung positiv ist, das Antwortmodul die Signatur der lokalen Registrierungsagentur mit dem öffentlichen Schlüssel dieser gleichen Agentur verifiziert, auf die das Modul Zugriff hat, und dass das Antwortmodul eine Aussage der Art « das vorgelegte öffentliche Schlüsselzertifikat ist nicht authentisch », wenn die Verifizierung missglückt, oder eine Aussage der Art « das vorgelegte Öffentliche Schlüsselzertifikat ist authentisch » liefert, wenn die Verifizierung glückt.

14. Struktur nach den Ansprüchen 3 und 5, **dadurch gekennzeichnet, dass** sie ein Antwortmodul aufweist, das auf allen elektronischen Notarservern installiert ist, das am Eingang die Anforderung des Anforderungsmoduls empfängt, das in der Datenbank des elektronischen Notarservers, eine öffentliche Schlüsseleigentumszertifikatsnummer, wenn sie existiert, identisch der empfangenen öffentlichen Schlüsselzertifikatsnummer sucht, dass, wenn das Ergebnis der Suche positiv ist, das Antwortmodul einen Versuch der Entschlüsselung des gefundenen öffentlichen Schlüsseleigentumszertifikats, wenn es undurchsichtig ist, mit dem empfangenen öffentlichen Schlüssel durchführt, dass, wenn die Entschlüsselung glückt, das Antwortmodul die Signatur der lokalen Registrierungsagentur mit dem öffentlichen Schlüssel dieser gleichen Agentur verifiziert, auf die das Modul Zugriff hat, und dass das Antwortmodul eine Aussage der Art « das vorgelegte öffentliche Schlüsselzertifikat ist nicht authentisch », wenn die Verifizierung missglückt, oder eine Aussage der Art « das vorgelegte öffentliche Schlüsselzertifikat ist authentisch » liefert, wenn die Verifizierung glückt.

15. Struktur nach Anspruch 5, **dadurch gekennzeichnet, dass** die Aussage oder die Aussagen mit dem privaten Schlüssel des elektronischen Notarservers signiert werden, und dass das Anforderungsmodul die Signatur der Aussage oder der Aussagen verifiziert, indem es den öffentlichen Schlüssel des elektronischen Notarservers verwendet.

## Claims

1. A non-hierarchical infrastructure for managing security key pair for physical persons or items such as animals, plants, machines and objects, comprising a public key and a private key with a public key certificate that has a unique number, said structure not including any certification authority separate from the physical persons or items, said structure comprising at least one registration authority and its electronic notary server, **characterized in that** at least one registration authority and its electronic notary server are provided for a trust circle, such as, for example, the sovereign circle, the territorial communities circle, the banking, finance and insurance circle, the Internet and telecommunications circle, the health circle, a private circle corresponding, for example, to a company, an organization or a group of people or items, said registration authority comprising proximity local registration agencies, such as, for example, respectively, notaries and bailiffs, town halls and post offices, bank and insurance branches, telecommunications agencies and shops, sickness insurance funds and pharmacies, company or organization branches or groups of persons or items, and also, possibly, roaming local branches, **in that** a local registration agency establishes, for each physical person or item, after face-to-face verification of his or her or its identity or of his or her or its identification, a public key certificate that has a unique number containing, notably, the address, for example URL, of the electronic notary server of the registration authority for which the local agency has registered the physical person or item, and a public key ownership certificate, with the same number as the public key certificate, which contains the identity of the physical person or the identification of the element and a representation of the public key thereof, said public key ownership certificate being self-sealed, that is to say that it is either signed with the private key of the physical person or of the item, or encrypted with the private key of the physical person or of the item, according to an atypical use of this key, in order to render it opaque apart from its number, and **in that** the signed or encrypted public key ownership certificate is transmitted securely to the associated electronic notary server which stores it.

2. The structure as claimed in claim 1, **characterized in that** the representation of the public key of the physical person or of the item is a hash value of this public key.

3. The structure as claimed in claim 1, **characterized in that** the public key ownership certificate of the physical person or of the item is also signed by the local registration agency and contains this signature.

4. The structure as claimed in claim 1, **characterized in that** the public key ownership certificates are retained on the electronic notary server of the registration authority.

5. The structure as claimed in claim 1, **characterized in that** it comprises a request module which takes as input the public key certificate of the physical person or of the item, interrogates the electronic notary server whose address is included in said public key certificate, by communicating the number of this public key certificate and said public key certificate, and which receives in return from the electronic notary server whose address is included in said public key certificate: an assertion as to the authenticity or the non-authenticity of the alleged public key of the physical person or of the item, and possibly an assertion as to the authenticity or the non-authenticity of the public key certificate of the physical person or of the item.

6. The structure as claimed in claim 5, **characterized in that** the request module which takes as input the public key certificate of the physical person or of the item checks the authenticity of the public key of the electronic notary server whose address and public key certificate are included in said public key certificate of the physical person or of the item.

7. The structure as claimed in claim 5, **characterized in that** the request module is placed, for example, in Internet browsers, email software, identity provider servers such as, for example, IDP and IP/STS, computer applications, computer processes.

8. The structure as claimed in claim 5, **characterized in that** it comprises a response module which is installed on all the electronic notary servers, which receives as input the request from the request module, which searches in the database of said electronic notary server to see if there is a public key ownership certificate number identical to the public key certificate number received and which delivers an assertion of the "the public key is not authentic" type if the result of the search is negative.

9. The structure as claimed in claim 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, said response module carries out a check on the signature of the public key ownership certificate found if it is legible, with the received public key, and delivers an assertion of the "the public key is not authentic" type if the check fails or an assertion of the "the public key is authentic" type if the check succeeds.

10. The structure as claimed in claim 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, this response module makes an attempt to decrypt the public key ownership certificate found if it is opaque, with the received public key and according to an atypical use of this key, and delivers an assertion of the "the public key is not authentic" type if the decryption fails or an assertion of the "the public key is authentic" type if the decryption succeeds.

11. The structure as claimed in claim 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, said response module carries out a check on the signature of the public key ownership certificate found if it is legible, with the received public key, **in that**, if the check is positive, said response module computes the hash value of the received public key, then compares it with the hash value of the public key stored in the public key ownership certificate and **in that** said response module delivers an assertion of the "the public key is not authentic" type if the two hash values are different or an assertion of the "the public key is if the two hash values are identical.

12. The structure as claimed in claim 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, said response module makes an attempt to decrypt the public key ownership certificate found if it is opaque, with the received public key, **in that**, if the decryption succeeds, said response module computes the hash value of the received public key, then compares it with the hash value of the public key stored in the previously decrypted public key ownership certificate and **in that** said response module delivers an assertion of the "the public key is not authentic" type if the two hash values are different or an assertion of the "the public key is authentic" type if the two hash values are identical.

13. The structure as claimed in claims 3 and 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, said response module carries out a check on the signature of the public key ownership certificate found if it is legible, with the received public key, **in that**, if the check is positive, said response module checks the signature of the local registration agency with the public key of this same agency to which the module has access and **in that** said response module delivers an assertion of the "the public key certificate presented is not authentic" type if the check fails or an assertion of the "the public key certificate presented is authentic" type if the check succeeds.

14. The structure as claimed in claims 3 and 5, **characterized in that** it comprises a response module which is installed on all the electronic notary servers, which receives as input the request from the request module, which searches in the database of said electronic notary server to see if there is a public key ownership certificate number identical to the public key certificate number received, **in that**, if the result of the search is positive, said response module makes an attempt to decrypt the public key ownership certificate found if it is opaque, with the received public key, **in that**, if the decryption succeeds, said response module checks the signature of the local registration agency with the public key of this same agency to which the module has access and **in that** said response module delivers an assertion of the "the public key certificate presented is not authentic" type if the check fails or an assertion of the "the public key certificate presented is authentic" type if the check succeeds.

15. The structure as claimed in claim 5, **characterized in that** the assertion(s) is/are signed with the private key of the electronic notary server and **in that** the requesting module checks the signature of the assertion(s) by using the public key of the electronic notary server.
